# EUROPÄISCHE PATENTSCHRIFT

(11) **EP 1 536 958 B1**
(45) Veröffentlichungstag und Bekanntmachung des Hinweises auf die Patenterteilung: **11.03.2009**
(21) Anmeldenummer: 03794946.8
(22) Anmeldetag: 27.08.2003
(51) Int. Cl.: B60G 17/015, B60G 17/052

(54) **LUFTFEDERUNGSANLAGE FÜR EIN FAHRZEUG**
PNEUMATIC SUSPENSION SYSTEM FOR A VEHICLE
SYSTEME DE SUSPENSION PNEUMATIQUE POUR VEHICULE

(30) Priorität: 02.09.2002 DE 10240358
(43) Veröffentlichungstag der Anmeldung: 08.06.2005
(73) Patentinhaber: WABCO GmbH, 30453 Hannover (DE)
(72) Erfinder: GEIGER, Hartmut, 30832 Garbsen (DE); RUSS, Andreas, 30966 Hemmingen (DE)
(74) Vertreter: Günther, Constantin
(86) Internationale Anmeldenummer: PCT/EP2003/009463
(87) Internationale Veröffentlichungsnummer: WO 2004/024476

(56) Entgegenhaltungen:
- EP-A- 0 343 391
- DE-A- 10 203 075
- DE-A- 19 713 313
- DE-C- 19 959 556
- US-A- 6 116 586

## Beschreibung

Die Erfindung betrifft eine Luftfederungsanlage für ein Fahrzeug gemäß dem Oberbegriff des Patentanspruchs 1, insbesondere für ein geschlossenes oder teilgeschlossenes System.

Eine gattungsgemäße Luftfederungsanlage ist aus der DE 199 59 556 C1 bekannt.

Bei derartigen Luftfederungsanlagen wird eine Druckluft-Förderungseinrichtung, z.B. ein Kompressor, dazu verwendet, einerseits bei Bedarf Luft von einem Druckluftspeicher in die Luftfederbälge zu pumpen, andererseits bei Bedarf die Luft von den Luftfederbälgen wieder in den Druckluftspeicher zu pumpen. Zum Umschalten zwischen diesen beiden Druckluft-Förderungsrichtungen ist zwischen dem Druckluftspeicher und den Luftfederbälgen auf der einen Seite und der Druckluft-Förderungseinrichtung auf der anderen Seite eine Umschaltventileinrichtung vorgesehen. Bei der eingangs genannten bekannten Luftfederungsanlage sind als Umschaltventileinrichtung beispielsweise zwei elektrisch betätigbare 3/2-Wegeventile vorgesehen, die als direkt gesteuerte Magnetventile ausgeführt sind.

Bei einer Luftfederungsanlage ist es erwünscht, daß das Befüllen und Entlüften der Luftfederbälge möglichst schnell erfolgen kann. Dies erfordert Ventileinrichtungen, insbesondere auch eine Umschaltventileinrichtung, mit großer Nennweite, d. h. mit großem Durchlaßquerschnitt. Derartige Ventileinrichtungen bauen relativ groß und sind infolgedessen relativ schwer und teuer.

Der Erfindung liegt daher die Aufgabe zugrunde, eine Luftfederungsanlage anzugeben, welche eine schnelle Befüllung und Entleerung der Luftfederbälge bei vergleichsweise kostengünstiger und kompakter Bauweise ermöglicht.

Diese Aufgabe wird durch die in dem Patentanspruch 1 angegebene Erfindung gelöst. Weiterbildungen und vorteihafte Ausgestaltungen der Erfindung sind in den Unteransprüchen angegeben.

Die Erfindung hat den Vorteil, daß die Umschaltventileinrichtung und damit auch die Luftfederungsanlage leichter und preisgünstiger ausführbar ist als vorbekannte Lösungen. Ein weiterer Vorteil ist, daß nur ein einziger Elektromagnet für die elektrische Betätigung erforderlich ist, der außerdem relativ klein ausgelegt sein kann. Hierdurch wird die elektrische Energieaufnahme bei der Betätigung des Elektromagneten im Vergleich zu vorbekannten Lösungen deutlich verringert. Zudem wird für die Ansteuerung der Umschaltventileinrichtung nur ein einziger Steueranschluß an einem elektronischen Steuergerät benötigt.

Unter Nennung weiterer Vorteile wird die Erfindung nachfolgend anhand von Ausführungsbeispielen unter Verwendung von Zeichnungen näher erläutert.

Es zeigen
- Fig. 1: eine teilgeschlossene Luftfederungsanlage in schematischer Darstellung und
- Fig. 2: eine Druckluft-Förderungseinrichtung zum Einsatz in der Luftfederungsanlage gemäß Fig. 1 und
- Fig. 3: ein 4/2-Wege-Umschaltventil in einer ersten Betriebsstellung und
- Fig. 4: das 4/2-Wege-Umschaltventil in einer zweiten Betriebsstellung und
- Fig. 5: das 4/2-Wegeventil in einer dritten Betriebsstellung und
- Fig. 6 bis 9: weitere Ausführungsformen einer Luftabgabe-/Trocknereinrichtung zum Einsatz in der Luftfederungsanlage gemäß Fig. 1 und
- Fig. 10 bis 12: weitere Ausführungsformen einer Umschaltventileinrichtung zum Einsatz in der Luftfederungsanlage gemäß Fig. 1 und
- Fig. 13 und 14: eine 4/2-Wege-Umschaltventileinrichtung in unterschiedlichen Schaltstellungen.

In den Figuren werden für einander entsprechende Teile gleiche Bezugszeichen verwendet.

Eine Luftfederungsanlage für ein Fahrzeug hat die Aufgabe, über Niveauverstellmittel die Niveaulage des Fahrzeugaufbaus gegenüber den Fahrzeugachsen und damit indirekt gegenüber der Fahrbahn einzustellen und zu regeln. Hierfür ist vorzugsweise an jedem Rad eines Fahrzeugs ein derartiges Niveauverstellmittel angeordnet, wobei als Niveauverstellmittel bevorzugt Luftfederbälge eingesetzt werden. Durch Befüllung oder Entlüftung der einzelnen Luftfederbälge können innerhalb eines dafür vorgesehenen Einstellbereichs beliebige Niveaulagen des Fahrzeugaufbaus eingestellt werden. Derartige Luftfederungsanlagen werden bevorzugt mit Druckluft als Druckmedium betrieben.

Unter einem offenen System versteht man bei Luftfederungsanlagen ein System, bei dem die Druckluft bei Bedarf aus der Umgebung, d. h. aus der Atmosphäre, angesaugt wird und in die Luftfederbälge oder in einen Druckluftspeicher, d.h. einen Vorratsbehälter, gepumpt wird. Der Druckluftspeicher ist jedoch nicht unbedingt erforderlich und wird je nach Anforderung auch fortgelassen. Bei einer Entlüftung der Luftfederbälge wird die Druckluft immer direkt in die Atmosphäre abgegeben. Ein Rückfordern der Druckluft von den Luftfederbälgen in den Druckluftspeicher ist dabei nicht vorgesehen. Das offene System ist vergleichsweise einfach aufgebaut und kommt mit relativ wenigen Bauteilen aus. Derartige Luftfederungsanlagen sind seit geraumer Zeit in Nutzfahrzeugen wie Lastkraftwagen und Omnibussen und auch in Personenkraftwagen im Einsatz.

Ein geschlossenes System dagegen enthält immer einen Druckluftspeicher, der - zumindest theoretisch - einmalig mit Druckluft befüllt wird, etwa bei der Herstellung der Luftfederungsanlage. Das geschlossene System hat - zumindest theoretisch - keinerlei Verbindung zur Atmosphäre. Im bestimmungsgemäßen Betrieb wird die Druckluft durch eine Druckluft-Förderungseinrichtung nach Bedarf von dem Druckluftspeicher in die Luftfederbälge bzw. von den Luftfederbälgen in den Druckluftspeicher hin- und hergefördert. Dies hat gegenüber einem offenen System den Vorteil, daß die von der Druckluft-Förderungseinrichtung, z.B. einem Kompressor, zu erbringende Änderung des Druckniveaus bei der Luftförderung in der Regel geringer ausfällt, da sich der Druck der zu fördernden Druckluft in der Regel auf einem gewissen, gegenüber der Atmosphäre relativ hohen Niveau befindet. Hierdurch ist der Energieverbrauch eines solchen Systems geringer. Zudem kann die Druckluft-Förderungseinrichtung auf die geringere Leistungsaufnahme hin ausgelegt werden. Vorteilhaft ist außerdem, daß die Druckluft-Förderungseinrichtung mit einer kürzeren Einschaltdauer betrieben werden kann und einer vergleichsweise geringeren Eigenerwärmung unterliegt.

Da derartige geschlossene Systeme in der Praxis infolge von Druckluftverlust, z. B. wegen Undichtigkeiten an den aus elastischem Material hergestellten Luftfederbälgen, nicht dauerhaft funktionsfähig wären, gibt es den Vorschlag, sogenannte teilgeschlossene Systeme zu verwenden, bei denen ebenfalls ein Druckluftspeicher vorgesehen ist und bei denen, solange genügend Druckluft in dem System vorhanden ist, die Druckluft wie in dem geschlossenen System zwischen dem Druckluftspeicher und den Luftfederbälgen hin- und hergefördert wird. Zusätzlich ist eine Verbindung zur Atmosphäre vorgesehen, welche zur Auffüllung des Systems mit Druckluft z. B. bei Druckverlusten oder starken Temperaturschwankungen dient und eine Luftansaugung aus der Atmosphäre erlaubt. Zur Vermeidung von Überdruck-Zuständen ist zusätzlich üblicherweise auch eine Luftabgabevorrichtung zur Entlüftung von Überdruck in die Atmosphäre vorgesehen.

In einem solchen teilgeschlossenen System findet demnach ein gewisser, wenn auch begrenzter, Luftaustausch mit der Atmosphäre statt. Hierdurch ist das teilgeschlossene System einerseits praxistauglich, kann aber andererseits auch die Vorteile eines geschlossenen Systems zu einem großen Teil nutzen. Eine derartige als teilgeschlossenes System ausgebildete Luftfederungsanlage weist bevorzugt die folgenden funktionellen Einheiten auf:
- Eine Druckluft-Förderungseinrichtung, die vorzugsweise als Kompressor ausgebildet ist und beispielsweise über einen Elektromotor angetrieben werden kann,
- einen Druckluftspeicher zur Speicherung von Druckluft auf einem bestimmten Druckniveau,
- die erwähnten Luftfederbälge,
- eine Luftansaugeinrichtung,
- eine Luftabgabeeinrichtung sowie
- eine Lufttrocknereinrichtung.

Die vorgenannten funktionellen Einheiten sind über betätigbare Ventileinrichtungen, insbesondere elektrisch betätigbare Ventileinrichtungen, derart miteinander verbindbar, daß bezüglich der Luftfederbälge die Funktionen "Luftmenge erhöhen", "Luftmenge halten" sowie "Luftmenge absenken" einstellbar sind. Über die Dauer eines "Luftmenge erhöhen"- bzw. "Luftmenge absenken"-Vorgangs kann dann eine gewünschte Niveaulage eingestellt werden. Gesteuert wird eine derartige Luftfederungsanlage vorzugsweise von einem elektronischen Steuergerät.

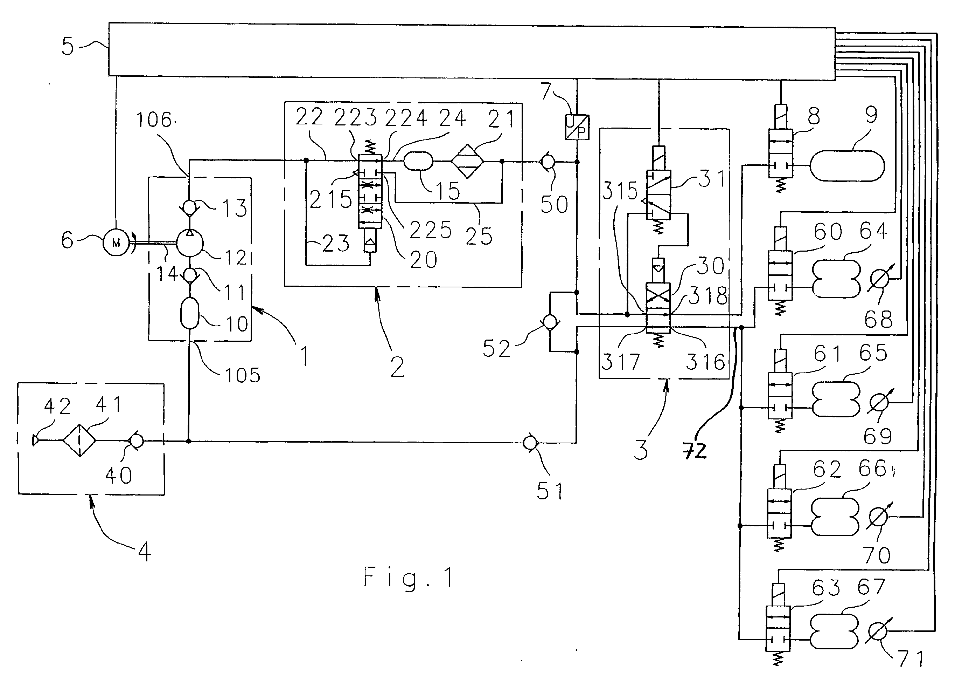

In der Fig. 1 ist eine bevorzugte Ausführungsform einer derartigen Luftfederungsanlage dargestellt.

In dem gestrichelt umrandeten Block (1) ist die zuvor erwähnte Druckluft-Förderungseinrichtung dargestellt. In dem gestrichelt umrandeten Block (2) ist die Luftabgabeeinrichtung in Kombination mit der Lufttrocknereinrichtung, nachfolgend Luftabgabe-/-trocknereinrichtung (2) genannt, dargestellt. In dem gestrichelt umrandeten Block (4) ist die Luftansaugeinrichtung dargestellt. Des weiteren sind der erwähnte Druckluftspeicher (9) sowie die Luftfederbälge (64, 65, 66, 67) dargestellt. Den Luftfederbälgen (64, 65, 66, 67) sind des weiteren Wegsensoren (68, 69, 70, 71) zugeordnet. Die Wegsensoren (68, 69, 70, 71) geben über elektrische Leitungen jeweils ein die Niveaulage des Fahrzeugaufbaus im Bereich desjenigen Luftfederbalgs, dem sie zugeordnet sind, repräsentierendes elektrisches Signal an ein elektronisches Steuergerät (5) ab.

In einem weiteren gestrichelt umrandeten Block (3) ist eine Umschaltventileinrichtung dargestellt, die zur Steuerung der Druckluftströmungsrichtung beim Hin- und Herfördern der Druckluft zwischen dem Druckluftspeicher (9) und den Luftfederbälgen (64, 65, 66, 67) dient. Mittels der Umschaltventileinrichtung (3) kann wechselweise in einer ersten Schaltstellung der Druckluftspeicher (9) als Druckluftquelle mit den Luftfederbälgen (64, 65, 66, 67) verbunden werden. In einer zweiten Schaltstellung der Umschaltventileinrichtung (3) können die Luftfederbälge (64, 65, 66, 67) als Druckluftquelle mit dem Druckluftspeicher (9) verbunden werden. In der ersten Schaltstellung ist demnach die Funktion "Luftmenge erhöhen" bezüglich der Luftfederbälge (64, 65, 66, 67) einstellbar, in der zweiten Schaltstellung ist die Funktion "Luftmenge absenken" einstellbar.

Der in der Fig. 1 dargestellte Druckluftspeicher (9) ist über ein als elektromagnetisch betätigbares 2/2-Wegeventil ausgestaltetes Absperrventil (8), nachfolgend auch Speicherventil genannt, mit einem Anschluß (318) der Umschaltventileinrichtung (3) verbunden. Die Luftfederbälge (64, 65, 66, 67) sind über jeweils vorgeschaltete Absperrventile (60, 61, 62, 63), nachfolgend auch Balgventile genannt, und über eine gemeinsame Druckluftleitung (72) an einen weiteren Anschluß (316) der Umschaltventileinrichtung (3) angeschlossen. Die Balgventile (60, 61, 62, 63) sind vorzugsweise ebenfalls als elektromagnetisch betätigbare 2/2-Wegeventile ausgebildet. An einem weiteren Anschluß (317) der Umschaltventileinrichtung (3) sind einlaßseitig angeschlossene Rückschlagventile (51, 52) vorgesehen. Das Rückschlagventil (51) ist auslaßseitig mit der Luftansaugeinrichtung (4) sowie einem Sauganschluß (105) der Druckluft-Förderungseinrichtung (1) verbunden. Ein Auslaßanschluß (106) der Druckluft-Förderungseinrichtung (1) ist mit einem Lufteinlaß der Luftabgabe-/-trocknereinrichtung (2) verbunden. An einem Auslaß der Luftabgabe-/-trocknereinrichtung (2) ist ein Rückschlagventil (50) angeordnet. Die Rückschlagventile (50, 52) sind auslaßseitig mit einem weiteren Anschluß (315) der Umschaltventileinrichtung (3) verbunden.

In der in der Fig. 1 dargestellten Ausgestaltung einer Luftfederungsanlage ist an der Auslaßseite des Rückschlagventils (50) ein Drucksensor (7) angeordnet, welcher den dort vorliegenden Druck erfaßt und ein diesen Druck repräsentierendes elektrisches Signal an das elektronische Steuergerät (5) abgibt. Der Drucksensor (7) kann bei Bedarf als Option vorgesehen werden oder zur Erzielung günstigerer Herstellkosten der Luftfederungsanlage auch entfallen, wie nachfolgend noch näher erläutert wird.

Weiterhin ist ein Elektromotor (6) vorgesehen, welcher über ein elektrisches Signal von dem elektronischen Steuergerät (5) einschaltbar ist. Der Elektromotor (6) treibt eine in der Druckluft-Förderungseinrichtung (1) vorgesehene Kolbenmaschine (12) über eine Antriebswelle (14) an.

Das elektronische Steuergerät (5) dient zur Steuerung sämtlicher Funktionen der Luftfederungsanlage. Hierfür ist das Steuergerät (5) über elektrische Leitungen mit einer elektrischen Betätigungseinrichtung der Umschaltventileinrichtung (3), den Absperrventilen (8, 60, 61, 62, 63), dem optionalen Drucksensor (7), den Wegsensoren (68, 69, 70, 71) und dem Elektromotor (6) verbunden.

Die Druckluft-Förderungseinrichtung (1) weist die nachfolgend erläuterten funktionellen Einheiten auf. Eine Kolbenmaschine (12) dient zum Fördern von Luft von dem Sauganschluß (105) zu dem Auslaßanschluß (106) der Druckluft-Förderungseinrichtung (1). Die Kolbenmaschine (12) kann als herkömmlicher Kolbenkompressor, z. B. auch als Kippkolbenkompressor, ausgelegt sein. Die Kolbenmaschine (12) ist, wie erwähnt, über eine Antriebswelle (14) antreibbar. Auf der Ansaugseite der Druckluft-Förderungseinrichtung (1) ist ein als Rückschlagventil ausgebildetes Saugventil (11) angeordnet. Auf der Auslaßseite der Druckluft-Förderungseinrichtung (1) ist ein ebenfalls als Rückschlagventil ausgebildetes Auslaßventil (13) angeordnet. Durch die Rückschlagventile (11, 13) wird die Förderungsrichtung der Druckluft-Förderungseinrichtung (1) bestimmt.

Als der Ansaugseite der Druckluft-Förderungseinrichtung (1) zugeordnet werden nachfolgend neben dem bereits erwähnten Saugventil (11) alle mit dem Sauganschluß (105) direkt oder indirekt pneumatisch verbundenen Teile der Luftfederungsanlage, von dem Saugventil (11) bis zu dem Anschluß (317) der Umschaltventileinrichtung (3), betrachtet. Im Ausführungsbeispiel gemäß Fig. 1 sind dies die Teile (10, 11, 40, 41, 42, 51, 105, 317) sowie der Einlaß des Rückschlagventils (52). Als der Anslaßseite der Druckluft-Förderungseinrichtung (1) zugeordnet werden nachfolgend neben dem bereits erwähnten Auslaßventil (13) alle mit dem Auslaßanschluß (106) direkt oder indirekt pneumatisch verbundenen Teile der Luftfederungsanlage, von dem Auslaßventil (13) bis zu dem Anschluß (315) der Umschaltventileinrichtung (3), betrachtet. Im Ausführungsbeispiel gemäß Fig. 1 sind dies die Teile (2, 7, 13, 50, 106, 315) sowie der Auslaß des Rückschlagventils (52).

Ein auf der Ansaugseite der Druckluft-Förderungseinrichtung (1) mit einem Speicher-Symbol dargestelltes Volumen (10) symbolisiert in der Darstellung die Fig. 1 sämtliche auf der Ansaugseite der Druckluft-Förderungseinrichtung (1) auftretenden Volumina, z. B. das Volumen des Kurbelgehäuses der Kolbenmaschine (12) oder auch die auf der Ansaugseite der Druckluft-Förderungseinrichtung (1) angeschlossenen Druckluftleitungen. Auf der Auslaßseite der Druckluft-Förderungseinrichtung(1) vorhandene Volumina sind in einem nachfolgend noch näher erläuterten Volumen (15) zusammengefaßt, das innerhalb der Fig. 1 in der Luftabgabe-/-trocknereinrichtung (2) dargestellt ist.

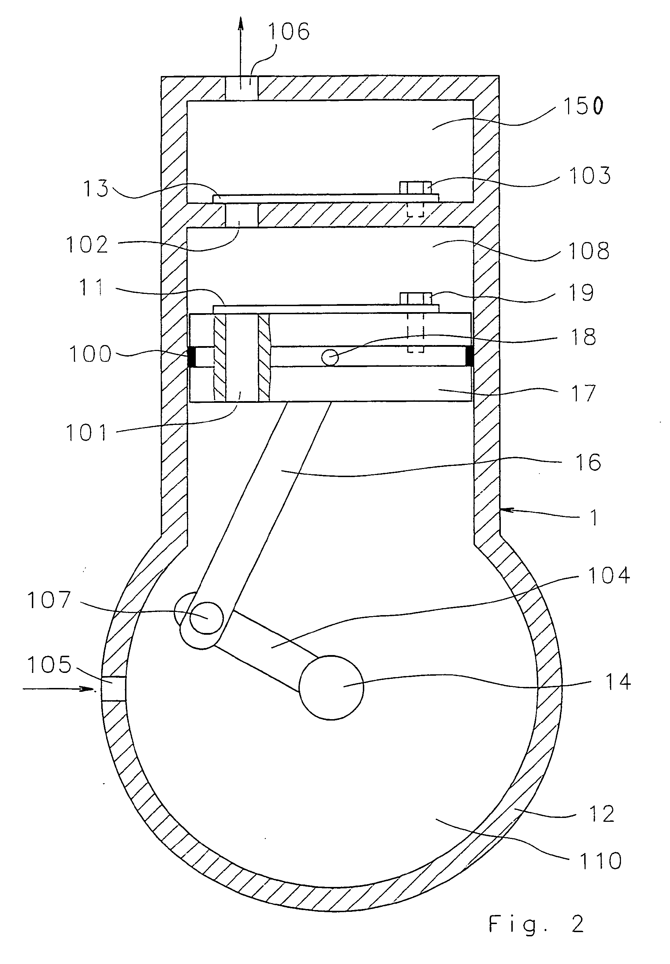

Ein Ausführungsbeispiel für eine derartige Druckluft-Förderungseinrichtung (1) ist in der Fig. 2 in Form eines Kolbenkompressors dargestellt. Die erwähnte Kolbenmaschine (12) weist innerhalb ihres Gehäuses eine Antriebswelle (14) auf, welche über ein Pleuel (104), ein Gelenk (107), eine Pleuelstange (16) sowie über ein weiteres Gelenk (18) mit einem Kolben (17) mechanisch verbunden ist. Infolge einer Drehung der Antriebswelle (14) führt der Kolben (17) eine Aufwärts- und Abwärtsbewegung durch. Der Kolben (17) ist mit einer umlaufenden Dichtung (100) versehen, welche einen oberhalb des Kolbens vorgesehenen Druckraum (108) gegenüber einem in dem Kurbelgehäuse des Kompressors (12) vorgesehenen Saugraum (110) abdichtet. Auf der Oberseite des Kolbens (17) ist das konstruktiv als Lamelle ausgeführte Saugventil (11) angeordnet, welches über eine Schraube (19) an dem Kolben (17) befestigt ist. Das Saugventil (11) dient zur Abdichtung des Druckraums (108) gegenüber einer den Kolben (17) durchdringenden Ansaugöffnung (101) bei einer Aufwärtsbewegung des Kolbens (17).

Oberhalb des Druckraums (108) ist ein Auslaßraum (150) vorgesehen. In dem Auslaßraum (150) ist das konstruktiv als Lamelle ausgeführte Auslaßventil (13) vorgesehen, das mittels einer Schraube (103) an der Unterseite des Auslaßraums (150) befestigt ist. Das Auslaßventil (13) dichtet den Auslaßraum (150) gegenüber einem Auslaßkanal (102) sowie gegenüber dem Druckraum (108) bei einer Abwärtsbewegung des Kolbens (17) ab.

Die über den Sauganschluß (105) angesaugte Luft strömt bei einem Abwärtshub des Kolbens (17) durch den Ansaugkanal (101) über das dann geöffnete Ventil (11) in den Druckraum (108), der dann über das Ventil (13) von dem Auslaßraum (150) abgesperrt ist. Bei einem Aufwärtshub des Kolbens (17) schließt das Saugventil (11), wodurch die in dem Druckraum (108) befindliche Luft durch den Auslaßkanal (102) über das dann geöffnete Auslaßventil (13) in den Auslaßraum (150) gepreßt wird. Aus dem Auslaßraum (150) kann die dort befindliche Druckluft dann über den Auslaßanschluß (106) in die nachgeschaltete Luftabgabe-/-trocknereinrichtung (2) strömen.

Gemäß Fig. 1 weist die Luftabgabe-/-trocknereinrichtung (2) in einer vorteilhaften Ausgestaltung ein druckluftgesteuertes 4/3-Wegeventil (20) sowie einen Lufttrockner (21) auf. Zwischen dem 4/3-Wegeventil (20) und dem Lufttrockner (21) ist das mit einem Speicher-Symbol dargestellte Volumen (15) dargestellt, das die von der Luftabgabe-/-trocknereinrichtung (2) herrührenden Volumina, inbesondere von der Lufttrockner-Kartusche, repräsentiert. Zusätzlich sind in dem Volumen (15) die auf der Auslaßseite der Druckluft-Förderungseinrichtung (1) vorhandenen Volumina zusammengefaßt.

Die von der Druckluft-Förderungseinrichtung (1) abgegebene Druckluft strömt in der in der Fig. 1 dargestellten Schaltstellung des Ventils (20) über eine Druckluftleitung (22) an einem Anschluß (223) in das Ventil (20), an einem weiteren Anschluß (224) aus dem Ventil (20) in eine Druckluftleitung (24), von dort durch den Lufttrockner (21) und von dort über das Rückschlagventil (50) zu der Umschaltventileinrichtung (3). Die Auslaßseite des Lufttrockners (21) ist über eine Druckluftleitung (25) zusätzlich an einen weiteren Anschluß (225) des Ventils (20) zurückgeführt, welcher in der dargestellten Schaltstellung der Fig. 1 abgesperrt ist. Ein weiterer Anschluß (215) des Ventils (20) dient als Entlüftungsanschluß der Luftfederungsanlage; dieser ist mit der Atmosphäre verbunden.

Der mit der Druckluft-Förderungseinrichtung (1) verbundene Anschluß (223) des Ventils (20) ist über eine Druckluftleitung (23) mit einem druckluftbetätigten Steueranschluß des Ventils (20) verbunden. Bei entsprechend ansteigendem Druck an dem Steueranschluß kann das Ventil (20) von der in der Fig. 1 dargestellten Schaltstellung in eine zweite und eine dritte Schaltstellung umgeschaltet werden. Der in der ersten Schaltstellung noch mit relativ großem Durchlaßquerschnitt versehene Verbindungskanal zwischen den Anschlüssen (223, 224) des Ventils (20) wird in der zweiten Schaltstellung in eine Drosselstellung mit deutlich vermindertem Durchlaßquerschnitt umgeschaltet. Die Druckluftleitung (25) ist in der zweiten Schaltstellung weiterhin abgesperrt. Bei weiter steigendem Druck an dem Steueranschluß wird schließlich die dritte Schaltstellung eingenommen. In dieser ist zwischen den Anschlüssen (223, 224) des Ventils (20) wiederum die erwähnte Drosselstellung mit deutlich vermindertem Durchlaßquerschnitt vorgesehen. Die Druckluftleitung (25) ist dann mit dem Druckluftauslaß am Anschluß (215), d. h. mit der Atmosphäre, verbunden, so daß Druckluft in die Atmosphäre abgegeben werden kann. Das Ventil (20) dient in diesem Zusammenhang auch als Überdrucksicherungsventil, d.h. als Sicherung gegen unerwünscht hohe Druckwerte in der Luftfederungsanlage, wie nachfolgend noch erläutert wird.

Durch die Drosselwirkung des Ventils (20) in der zweiten und der dritten Schaltstellung entspannt sich die Druckluft auf ihrem Weg von der Druckluftleitung (22) zu der Druckluftleitung (24), kommt demzufolge entspannt, d. h. auf geringerem Druckniveau, in dem Lufttrockner (21) an und kann dann bei Erreichen der dritten Schaltstellung des Ventils (20) in die Atmosphäre entlassen werden. Durch das Entspannen der Druckluft infolge der Drosselwirkung wird eine verbesserte Regenerationswirkung des in dem Lufttrockner (21) befindlichen Trockner-Granulates erreicht, d. h. es wird mit relativ wenig Druckluftverbrauch eine relativ hohe Trocknungswirkung erzielt.

Im Gegensatz zu bekannten Luftfederungsanlagen ist bei der hier beschriebenen Luftfederungsanlage die Lufttrocknereinrichtung in vorteilhafter Weise derart angeordnet, daß sie sowohl im normalen Betrieb der Luftfederungsanlage als auch im sogenannten Regenerationsbetrieb, d. h. beim Entfeuchten des Trockner-Granulates, immer in derselben Strömungsrichtung von der Druckluft durchströmt wird. Dies hat den Vorteil, daß der Lufttrockner (21) permanent an der Auslaßseite der Druckluft-Förderungseinrichtung (1), insbesondere räumlich relativ dicht an der Druckluft-Förderungseinrichtung, angeordnet werden kann und hierdurch in jeder Betriebsart mit von der Druckluft-Förderungseinrichtung vorgewärmter Luft durchströmt werden kann. Durch die räumlich dichte Anordnung an der Druckluft-Förderungseinrichtung kann die angewärmte Druckluft mit relativ wenig Temperaturabfall den Lufttrockner (21) erreichen. Da warme Luft die Feuchtigkeit wesentlich besser aufnehmen kann als kalte Luft, kann durch diese Ausgestaltung der Erfindung eine weitere wesentliche Verbesserung des Wirkungsgrades bei der Regeneration des Trockner-Granulates erreicht werden.

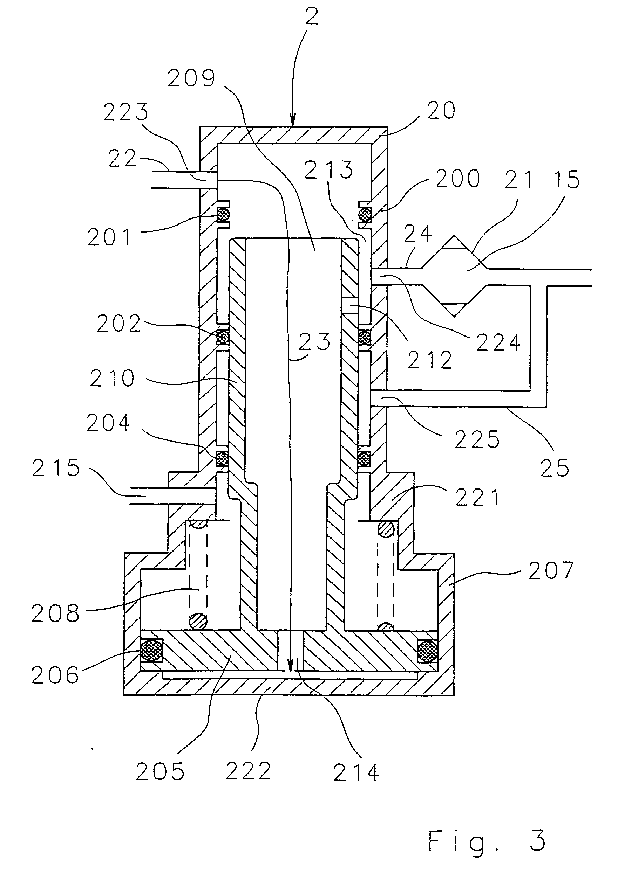

In der Fig. 3 ist die Luftabgabe-/-trocknereinrichtung (2), wie zuvor beschrieben, mit einer vorteilhaften konstruktiven Ausführung des 4/3-Wegeventils (20) in seiner ersten Schaltstellung dargestellt. Das Ventil (20) weist ein Gehäuse (200) auf, welches in seinem im unteren Bereich der Fig. 3 dargestellten Abschnitt einen im Vergleich zu seinen anderen Abschnitten vergrößerten Querschnitt aufweist. Das Gehäuse (200) kann beispielsweise rotationssymmetrisch ausgeführt werden. Innerhalb des Gehäuses (200) ist ein Ventilkörper (209) angeordnet, welcher mit einem zur Betätigung des Ventilkörpers (209) vorgesehenen Kolbens (205) starr verbunden ist. Der Kolben (205) ist in dem Gehäuseabschnitt (207) geführt und über eine umlaufende Dichtung (206) in dem Gehäuseabschnitt (207) abgedichtet. In dem in der Fig. 3 dargestellten drucklosen bzw. nahezu drucklosen Zustand des Ventils (20) wird der Kolben (205) durch eine Feder (208), die sich an einem sockelförmigen Bereich (221) des Gehäuses (200) abstützt, gegen den Boden (222) des Gehäuses (200) gedrückt.

In gewissen Abständen sind in dem Gehäuse (200) ringförmige Dichtungen (201, 202, 204) angeordnet, die durch in dem Gehäuse (200) angeordnete Nuten in ihrer Position gehalten werden. Der Ventilkörper (209) weist eine Wandung (210) auf, die innerhalb der Dichtungen (201, 202, 204) geführt ist und infolge einer Bewegung des Kolbens (205) gegenüber den Dichtungen (201, 202, 204) verschiebbar ist. Das Gehäuse (200) weist Öffnungen (223, 224, 225) auf, an die die zuvor erwähnten Druckluftleitungen (22, 24, 25) angeschlossen sind. Des weiteren ist im unteren Bereich des Gehäuses (200) eine Öffnung für den Entlüftungsanschluß (215) vorgesehen.

Die Wandung (210) des Ventilkörpers (209) weist auf der der Öffnung (224) zugewandten Seite eine Öffnung (212) auf. Diese Öffnung (212) ist in ihrem Querschnitt relativ klein bemessen, verglichen mit den übrigen Durchflußquerschnitten des Ventils (20). Hierdurch kann bei einem Druckluft-Durchfluß durch die Öffnung (212) eine Drosselwirkung erzielt werden, die in der erwähnten zweiten und dritten Schaltstellung des Ventils (20) wirksam wird.

Ein über die Druckluftleitung (22) eingespeister Druckluftstrom kann in der in der Fig. 3 dargestellten Schaltstellung des Ventils (20) durch den Kanal (213) in die Druckluftleitung (24) gelangen und von dort aus durch den Lufttrockner (21) zu dem Rückschlagventil (50) gelangen. Ein Druckluftstrom durch die Druckluftleitung (25) wird durch die Dichtungen (202, 204) unterbunden, d. h. die Druckluftleitung (25) ist abgesperrt. Gemäß der durch den Pfeil (23) angedeuteten Flußrichtung kann sich die Druckluft außerdem durch eine den Kolben (205) durchdringende Öffnung (214) in den von dem Kolben (205), der Gehäuseunterseite (222) sowie der Dichtung (206) abgeschlossenen Raum ausbreiten.

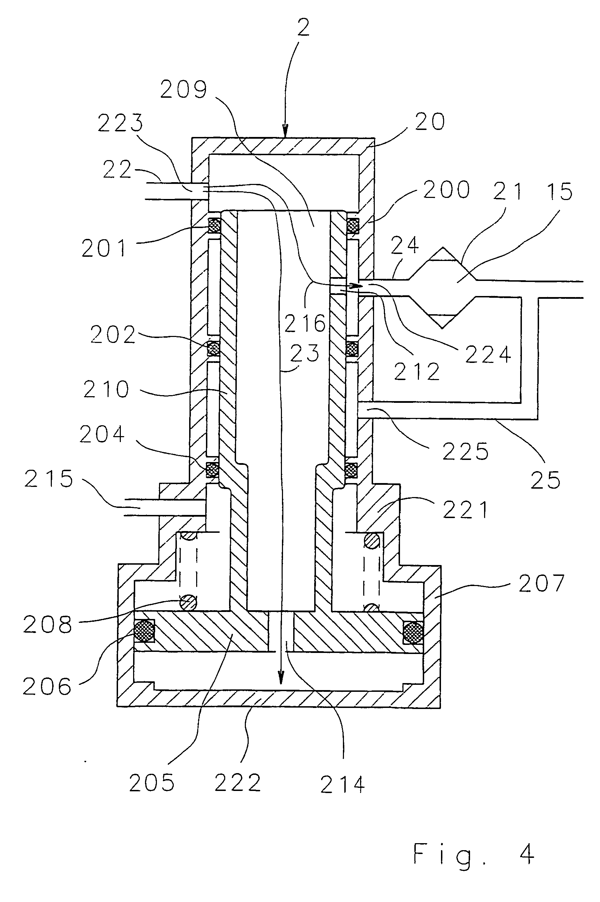

Sobald der über die Druckluftleitung (22) in das Ventil (20) eingespeiste Druck einen gewissen Mindestwert überschreitet, der unter anderem auch von der Reibung zwischen dem Ventilkörper (209) und den Dichtungen (201, 202, 204) abhängt, beginnt der Kolben (205), sich entgegen der Kraft der Feder (208) vom Gehäuseboden (222) wegzubewegen. Ein derartiger Zustand ist in der Fig. 4 dargestellt, wobei in der Fig. 4 der in dem Ventil (20) vorhandene Druck bereits eine Größe erreicht hat, bei dem der Kolben (205) entgegen der Kraft der Feder (208) eine wesentliche Bewegung ausgeführt hat, durch die das Ventil (20) seine zweite Schaltstellung einnimmt.

In dieser zweiten Schaltstellung erreicht der Ventilkörper (209) die Dichtung (201), wodurch der in der Fig. 3 dargestellte Kanal (213) abgesperrt wird. Ein Druckluftstrom von der Druckluftleitung (22) zu der Druckluftleitung (24) erfolgt nun durch die als Drosselstelle wirkende Öffnung (212), wie durch den Pfeil (216) angedeutet. Gemäß dem Pfeil (23) erfolgt weiterhin eine Druckluftausbreitung durch die Öffnung (214) in den von dem Kolben (205), dem Gehäuseboden (222) und die Dichtung (206) umschlossenen Raum. Die Druckluftleitung (25) ist weiterhin abgesperrt.

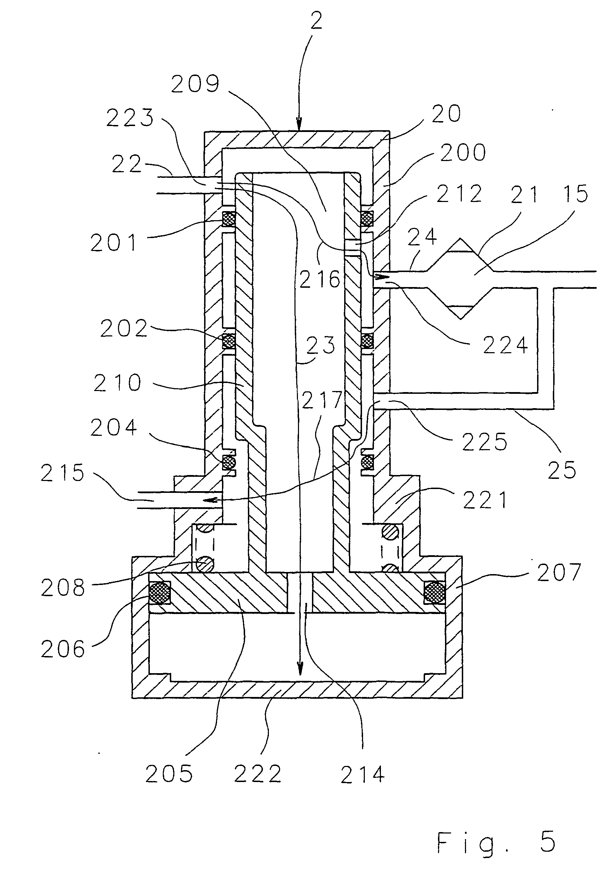

Bei weiter ansteigendem Druck in dem Ventil (20) wird die in der Fig. 5 dargestellte dritte Schaltstellung des Ventils (20) eingenommen. In dieser Schaltstellung liegt der Kolben (205) an der Oberseite des Gehäusebereichs (207) an. Ein Druckluftstrom von der Druckluftleitung (22) zu der Druckluftleitung (24) erfolgt wie in der zweiten Schaltstellung weiterhin gedrosselt durch die Öffnung (212), wie durch den Pfeil (216) dargestellt. Der zuvor durch die Dichtungen (202, 204) geschlossene und die Druckluftleitung (25) absperrende Raum ist nun gegenüber der Dichtung (204) geöffnet, so daß Druckluft von der Druckluftleitung (25) durch die Öffnung (215) in die Atmosphäre ausströmen kann, wie durch den Pfeil (217) dargestellt.

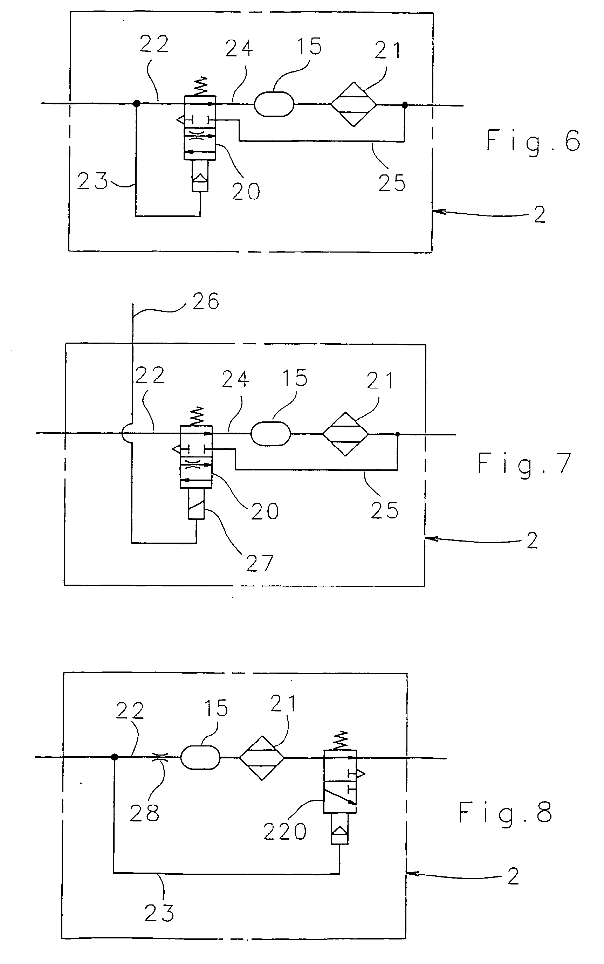

In der Fig. 6 ist eine alternative Ausführungsform der Luftabgabe-/-trocknereinrichtung (2) dargestellt. Hier wird statt des zuvor erläuterten 4/3-Wegeventils ein 4/2-Wegeventil verwendet, d. h. ein vereinfacht ausgeführtes Ventil mit nur zwei Schaltstellungen. Hierdurch kann das Ventil (20) einfacher konstruiert und kostengünstiger hergestellt werden.

In einer weiteren Ausführungsform, die in der Fig. 7 dargestellt ist, kann die Luftabgabe-/-trocknereinrichtung (2) auch mit einem elektromagnetisch betätigbaren Ventil (20) versehen werden. Das Ventil (20) gemäß Fig. 7 weist einen Elektromagneten (27) als Betätigungselement statt der Druckmittelbetätigung auf. Der Elektromagnet (27) kann über eine elektrische Leitung (26) mit dem Steuergerät (5) verbunden werden.

In einer weiteren Ausgestaltung gemäß Fig. 8 ist die Luftabgabe-/-trocknereinrichtung (2) mit einer druckgesteuerten Ventileinrichtung (220) versehen, die dem Lufttrockner (21) nachgeschaltet ist. Dem Lufttrockner (21) ist außerdem eine Drossel (28) vorgeschaltet. Die Ventileinrichtung (220) ist als ein 3/2-Wegeventil ausgebildet, daß in die an dem Druckauslaß des Lufttrockners (21) angeschlossene Druckluftleitung geschaltet ist. Hierdurch ergibt sich eine einfache Führung der Druckluftleitungen auf der Auslaßseite des Lufttrockners (21).

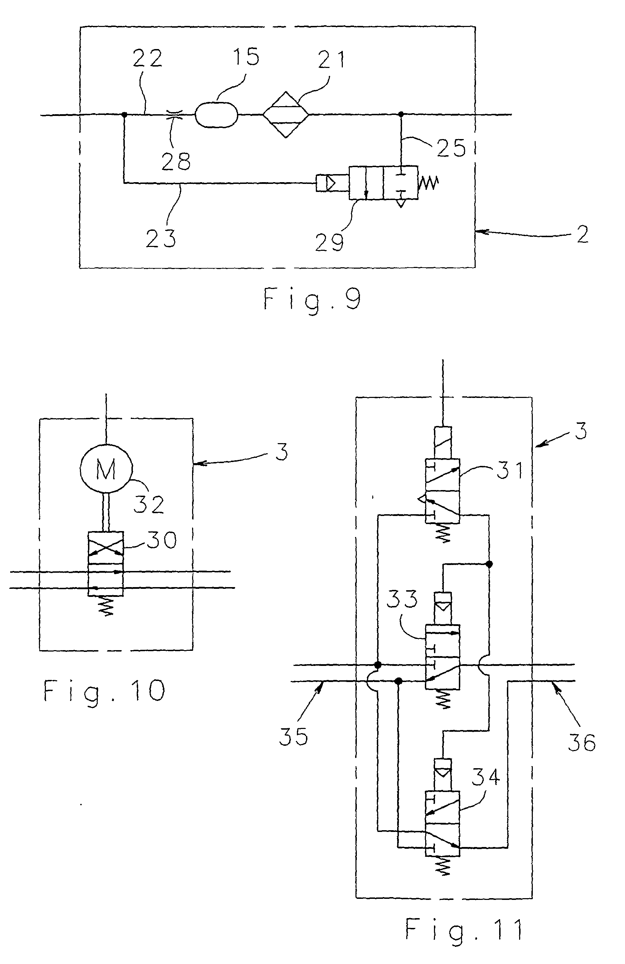

In der Fig. 9 ist eine weitere Ausgestaltung der Luftabgabe-/-trocknereinrichtung (2) dargestellt, die wie in der Fig. 8 eine dem Lufttrockner (21) vorgeschaltete Drossel (28) sowie eine dem Lufttrockner (21) nachgeschaltete, druckgesteuerte Ventileinrichtung (29) vorsieht. Die Ventileinrichtung (29) ist als 2/2-Wegeventil ausgebildet. Hierdurch ist die Luftabgabe-/-trocknereinrichtung (2) besonders kostengünstig herstellbar. Die gemäß Fig. 9 dargestellte zusätzliche Abzweigungsstelle der Druckluftleitungen auf der Auslaßseite des Lufttrockners kann in einer praktischen Realisierung vorteilhaft direkt in die Ventileinrichtung (29) integriert werden, sodaß sich gegenüber der Ausgestaltung gemäß Fig. 8 kein erhöhter Aufwand hinsichtlich der Führung der Druckluftleitungen ergibt.

Für eine schnelle Druckluftförderung zu den Luftfederbälgen bzw. von den Luftfederbälgen ist die Drossel (28) derart auszulegen, daß eine für die gewünschten Anforderungen ausreichende Druckluftströmung durch die Drossel (28) möglich ist. Um hingegen bei geöffneter Ventileinrichtung (29) eine gute Regenerationswirkung des Trockner-Granulates zu erreichen, sollte der Durchlaßquerschnitt der Ventileinrichtung (29, 220) deutlich größer sein als der Durchlaßquerschnitt der Drossel (28), z.B. im Verhältnis 4:1.

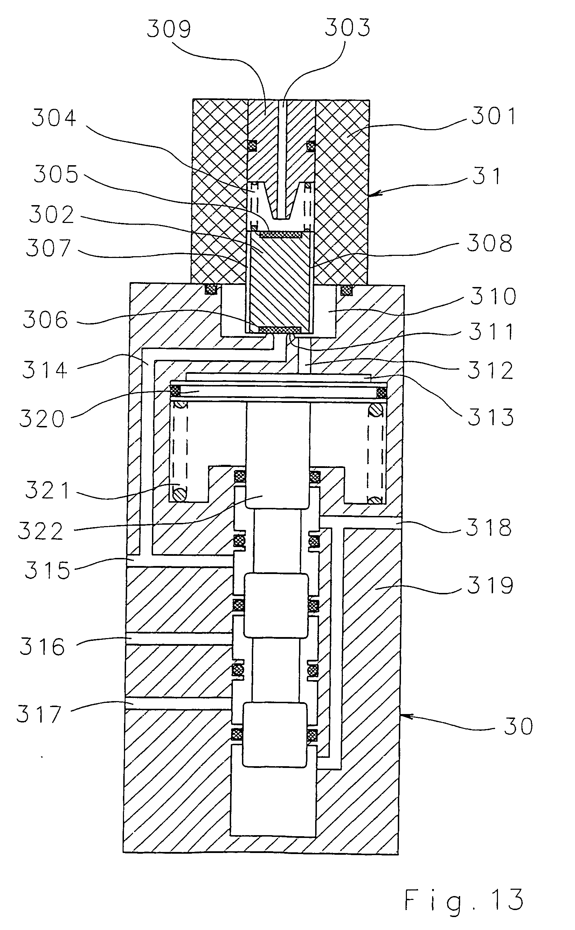

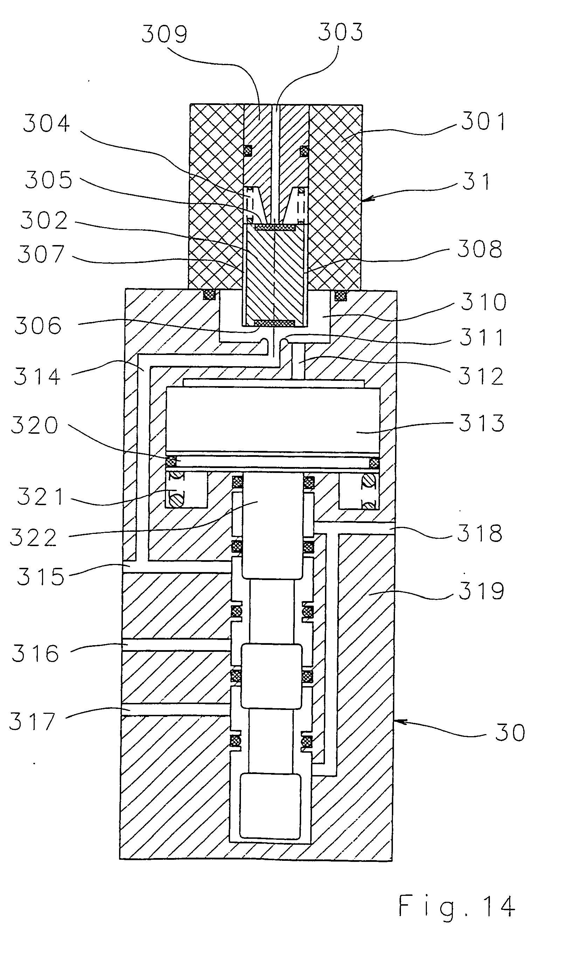

Gemäß Fig. 1 wird als Umschaltventileinrichtung (3) eine durch Druckluft vorgesteuerte, elektromagnetisch betätigbare Wegeventil-Anordnung vorgeschlagen, die aus einem Vorsteuerventil (31) und einem Umschaltventil (30) besteht. Das Vorsteuerventil (31) ist als ein elektromagnetisch betätigtes 3/2-Wegeventil ausgebildet, welches von dem Steuergerät (5) über eine elektrische Leitung betätigbar ist. Das Umschaltventil (30) ist als ein druckluftbetätigbares 4/2-Wegeventil ausgebildet, das über Druckluftanschlüsse (315, 316, 317, 318) mit den übrigen Teilen der Luftfederungsanlage verbunden ist. Der druckluftbetätigbare Steuereingang des Umschaltventils (30) ist über das Vorsteuerventil (31) wahlweise mit dem von der Druckluft-Förderungseinrichtung (1) über die Luftabgabe-/-trocknereinrichtung (2) und das Rückschlagventil (50) abgegebenen Druck oder mit der Atmosphäre verbindbar. Zur Vermeidung von unerwünscht hohem Luftverbrauch beim Betätigen des Umschaltventils (30) ist das Steuervolumen dieses Ventils gering zu halten. Ein Ausführungsbeispiel für ein derartig ausgestaltetes Umschaltventil mit geringem Steuervolumen ist in den Fig. 13 und 14 dargestellt. Des weiteren ist es vorteilhaft, zur Minimierung des Luftverbrauchs die Umschalthäufigkeit durch geeignete Steueralgorithmen in dem Steuergerät (5) geringzuhalten.

Gegenüber einem direkt durch einen Elektromagneten gesteuerten 4/2-Wege-Umschaltventil hat die in der Fig. 1 dargestellte Ventilanordnung (3) mit einem Vorsteuerventil den Vorteil, daß die Betätigungskräfte, welche der Elektromagnet aufbringen muß, geringer ausfallen. Hierdurch kann der Elektromagnet kleiner und kostengünstiger ausgelegt werden. Das Entnehmen des Vorsteuerdrucks aus dem Druckluftausgangzweig der Druckluft-Förderungseinrichtung (1) hat den Vorteil, daß die Umschaltventileinrichtung (3) in jedem Betriebszustand der Luftfederungsanlage funktionsfähig ist, z. B. auch bei erstmaliger Inbetriebnahme bei noch leerem Druckluftspeicher (9).

In der Fig. 10 ist eine alternative Ausführung der Umschaltventileinrichtung (3) mit einem elektromotorisch betätigbaren, als Schieberventil ausgebildeten Umschaltventil (30) sowie einem von dem Steuergerät (5) zur Betätigung ansteuerbaren Elektromotor (32) dargestellt.

Eine weitere alternative Ausführungsform der Umschaltventileinrichtung (3) ist in der Fig. 11 dargestellt. Dort wird statt eines einzigen Umschaltventils mit 4/2-Wegefunktion, wie anhand der Fig. 1 und 10 erläutert, eine Kombination aus zwei druckgesteuerten 3/2-Wegeventilen (33, 34) vorgeschlagen, welche von dem bereits erläuterten Vorsteuerventil (31) betätigbar sind. Die in der Fig. 11 dargestellte Umschaltventileinrichtung (3) kann hinsichtlich ihrer Druckluft-Anschlußseiten (35, 36) nach Belieben in die Luftfederungsanlage gemäß Fig. 1 integriert werden. Mit anderen Worten, es kann z. B. die Anschlußseite (35) mit der Druckluft-Förderungseinrichtung und die Anschlußseite (36) mit dem Druckluftspeicher bzw. den Luftfederbälgen verbunden werden. Umgekehrt kann auch die Anschlußseite (36) mit der Druckluft-Förderungseinrichtung und dann die Anschlußseite (35) mit dem Druckluftspeicher und den Luftfederbälgen verbunden werden.

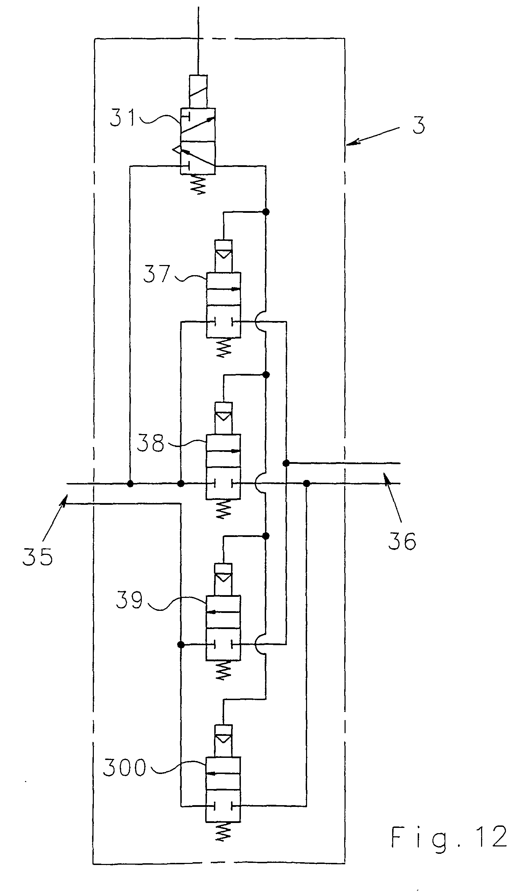

Eine weitere Ausführungsform der Umschaltventileinrichtung (3) ist in der Fig. 12 angegeben. Dort werden für die Umschaltung vier pneumatisch betätigbare 2/2-Wegeventile (37, 38, 39, 300) eingesetzt, welche von dem bereits erläuterten Vorsteuerventil (31) betätigbar sind. Die Anschlußseiten (35, 36) der Umschaltventileinrichtung (3) können ebenfalls, wie anhand der Fig. 11 erläutert, wahlweise in die Luftfederungsanlage gemäß Fig. 1 angeschlossen werden.

Anhand der Fig. 13 und 14 soll eine vorteilhafte konstruktive Ausgestaltung der in der Fig. 1 dargestellten Umschaltventileinrichtung (3) erläutert werden. In der Fig. 13 ist die Umschaltventileinrichtung (3) im unbetätigten Zustand dargestellt, in der Fig. 14 im betätigten Zustand.

Die Umschaltventileinrichtung (3) besteht, wie erläutert, aus dem Vorsteuerventil (31) und dem Umschaltventil (30). Das Vorsteuerventil (31) weist eine Elektromagnetanordnung (301, 302) auf, die als elektrische Spule (301) und ein innerhalb der Spule (301) angeordneter, in Längsrichtung der Spule (301) beweglicher Anker (302) ausgebildet ist. Der Anker (302) dient zugleich als Ventilschließkörper. Für den Verwendungszweck als Ventilschließkörper ist der Anker an seiner einen Stirnseite mit einer aus einem Elastomer bestehenden Dichtung (305) und an seiner entgegengesetzten Stirnseite mit einer weiteren ebenfalls aus einem Elastomer bestehenden Dichtung (306) versehen. An seinem Umfang weist der Anker (302) in Längsrichtung verlaufende Nuten (307, 308) auf, die als Luftführungskanäle dienen. Der Anker (302) stützt sich auf einer Feder (304) ab, die innerhalb der Spule (301) angeordnet ist. Die Feder (304) stützt sich wiederum auf einem Ventilverschlußstück (309) ab, welches das Vorsteuerventil (31) an seiner Oberseite abschließt. Das Ventilverschlußstück (309) ist mit einer entlang seiner Längsachse verlaufenden Bohrung versehen, welche als Druckauslaßkanal (303) zur Entlüftung der von dem Vorsteuerventil (31) in das Umschaltventil (30) einsteuerbaren Druckluft in die Atmosphäre dient.

Das Vorsteuerventil (31) ist mit dem Umschaltventil (30) zu einer starren Einheit verbunden. In dem unbetätigten Zustand, wie in Fig. 13 dargestellt, wird der Anker (302) infolge der Kraft der Feder (304) auf einen in dem Umschaltventil (30) vorgesehenen Ventilsitz (311) gedrückt. Hierbei verschließt die Dichtung (306) den Ventilsitz (311). Die Dichtung (305) liegt in diesem Zustand nicht an dem Ventilverschlußstück (309) an, d. h. der Druckauslaßkanal (303) ist geöffnet.

Das Umschaltventil (30) besteht aus einem Ventilgehäuse (319), der verschiedene Druckluftanschlüsse (314, 316, 317, 318) sowie Lüftführungskanäle (314, 312) aufweist. Der Druckluftanschluß (315) dient zum Anschluß an die Auslaßseite der Druckluft-Förderungseinrichtung (1), d. h. bei Zugrundelegung der Darstellung der Fig. 1 zum Anschluß an die Auslaßseiten der Rückschlagventile (50, 52). Der Druckluftanschluß (317) dient zum Anschluß an die Ansaugseite der Druckluft-Förderungseinrichtung (1), d. h. gemäß Fig. 1 zum Anschluß an die Einlaßseiten der Rückschlagventile (51, 52). Der Druckluftanschluß (318) dient zum Anschluß des Druckluftspeichers (9) über das Speicherventil (8). Der Druckluftanschluß (316) dient zum Anschluß der Luftfederbälge (64, 65, 66, 67) über die Balgventile (60, 61, 62, 63).

Über den Druckluftkanal (314) kann zur Vorsteuerung zu verwendende Druckluft zu dem Vorsteuerventil (31) bzw. zum Anker (302) strömen. Bei einer Betätigung des Vorsteuerventils (31) durch Anlegen vom elektrischem Strom wird der Anker (302) entgegen der Kraft der Feder (304) in die in der Fig. 14 dargestellte Stellung bewegt. Hierbei wird der Ventilsitz (311) freigegeben, so daß Druckluft über eine Kammer (310) sowie über den Druckluftkanal (312) in eine Vorsteuerkammer (313) strömen kann. Die Vorsteuerkammer (313) wird von einem längsbeweglichen Kolben (320) begrenzt, der mit dem in der Vorsteuerkammer (313) befindlichen Druckluft beaufschlagt wird. Der Kolben (320) stützt sich über eine Feder (321) an einen Gegenanschlag im Ventilgehäuse (319) ab. Bei entsprechender Druckluftbeaufschlagung in der Kammer (313) bewegt sich der Kolben (320) entgegen der Kraft der Feder (321) in die in der Fig. 14 dargestellte Stellung. Hierbei wird ein mit dem Kolben (320) fest verbundener Ventilschieber (322) in die in der Fig. 14 dargestellte Position mitbewegt.

Über den Ventilschieber (322) werden die Verbindungen zwischen den Druckluftanschlüssen (315, 316, 317, 318) in der anhand der Fig. 1 bereits erläuterten Weise hergestellt. In der in der Fig. 13 dargestellten unbetätigten Stellung der Umschaltventileinrichtung (3) ist dabei der Druckluftanschluß (315) mit dem Druckluftanschluß (318) verbunden, und der Druckluftanschluß (316) ist mit dem Druckluftanschluß (317) verbunden. Im betätigten Fall gemäß Fig. 14 ist der Druckluftanschluß (315) mit dem Druckluftanschluß (316) verbunden, und der Druckluftanschluß (317) ist mit dem Druckluftanschluß (318) verbunden.

Als weitere Funktionseinheit ist in der Fig. 1 die Luftansaugeinrichtung (4) vorgesehen. Diese weist einen mit der Atmosphäre verbundenen Luftansauganschluß (42), einen Filter (41) zur Ausfilterung von Verunreinigungen der Umgebungsluft sowie ein Rückschlagventil (40) auf. Diese Art der Ausführungsform der Luftansaugeinrichtung (4) hat den Vorteil, daß bei entsprechendem Luftbedarf an der Ansaugseite der Druckluft-Förderungseinrichtung (1), z. B. bei zu geringem Druck in dem Druckluftspeicher (9) oder bei abgesperrten Ventilen (8, 60, 61, 62, 63) im Falle der Regeneration des Trockner-Granulates, automatisch in ausreichender Weise Luft aus der Atmosphäre angesaugt wird, da das Rückschlagventil (40) keiner besonderen Steuerung bedarf.

Die zuvor hinsichtlich ihres Aufbaus beschriebene Luftfederungsanlage kann in einer Reihe von Betriebsmodi betrieben werden, die nachfolgend erläutert werden sollen. Hierbei ergeben sich bei der in der Fig. 1 dargestellten Luftfederungsanlage sowie bei den zuvor erläuterten Ausgestaltungen gemäß den Fig. 2 bis 14 eine Reihe von Synergieeffekten, durch die die Luftfederungsanlage besonders effizient eingesetzt werden kann.

Folgende Betriebsmodi der Luftfederungsanlage werden nachfolgend unterschieden:
1. "Neutralzustand": Hiermit ist ein Grundzustand der Luftfederungsanlage bezeichnet, in welchem keine Druckluftförderung oder Druckluftbewegung zwischen den einzelnen Komponenten der Luftfederungsanlage durchgeführt wird. Dieser Zustand wird insbesondere bei den in der Fig. 1 angegebenen Schaltstellungen der Ventile sowie bei ausgeschaltetem Elektromotor (6) eingenommen .
2. "Erhöhen": Hiermit ist ein Erhöhen der Druckluftmenge in einem oder mehreren Luftfederbälgen (64, 65, 66, 67) bezeichnet.
3."Absenken": Hiermit ist ein Absenken der Druckluftmenge in einem oder mehreren Luftfederbälgen (64, 65, 66, 67) bezeichnet.
4. "Minderdruckkompensation": Hiermit ist eine Kompensation von zu geringem Luftdruck bzw. einer zu geringen Druckluftmenge, z. B. in dem Druckluftspeicher (9), durch Ansaugung von Luft aus der Atmosphäre bezeichnet.
5. "Überdruckkompensation": Hiermit ist eine Kompensation von zu hohem Luftdruck bzw. einer zu großen Druckluftmenge in der Luftfederungsanlage, z. B. in dem Druckluftspeicher (9), durch Entlüftung in die Atmosphäre bezeichnet.
6. "Regeneration": Hiermit ist eine Regeneration des Lufttrockners (21) bezeichnet, d. h. das Entfernen von in dem Trockner-Granulat des Lufttrockners (21) gespeicherter Feuchtigkeit durch Entlüftung von in der Luftfederungsanlage gespeicherter oder aus der Atmosphäre angesaugter Luft durch den Lufttrockners (21) in die Atmosphäre.
7. "Anlaufhilfe": Hiermit ist eine Unterstützung des Anlaufens der Druckluft-Förderungseinrichtung (1) bzw. dessen als Antrieb verwendeten Elektromotors (6) durch Druckluftunterstützung bezeichnet.

Ausgehend von dem Neutralzustand sind bei erstmaliger Inbetriebnahme der Luftfederungsanlage gemäß Fig. 1 der Druckluftspeicher (9) sowie die Luftfederbälge (64, 65, 66, 67) zunächst auf einem Druckniveau, das dem Atmosphärendruck entspricht. Eine für eine bestimmungsgemäße Funktion der Luftfederungsanlage ausreichende Druckluftmenge ist somit in diesem Zustand somit noch nicht vorhanden. Dies erkennt das Steuergerät (5) durch Auswertung der durch die Wegsensoren (68, 69, 70, 71) bereitgestellten Weginformationen. Sofern der Drucksensor (7) ebenfalls vorgesehen ist, zieht das Steuergerät (5) die durch den Drucksensor (7) bereitgestellte Druckinformation zusätzlich zur Erkennung der nicht ausreichenden Luftmenge heran. In diesem Zustand steuert das Steuergerät (5) die Luftfederungsanlage zunächst einmal in den Betriebsmodus "Minderdruckkompensation".

Hierfür wird mittels der Umschaltventileinrichtung (3) eine Verbindung zwischen dem Auslaßanschluß (106) der Druckluft-Förderungseinrichtung (1) und den Luftfederbälgen (64, 65, 66, 67) geschaltet. Hierdurch wird zugleich der Druckluftspeicher (9) mit der Ansaugseite der Druckluft-Förderungseinrichtung (1) verbunden. Zudem werden das Speicherventil (8) und die Balgventile (60, 61, 62, 63) in die geöffnete Stellung geschaltet. Sodann wird der Elektromotor (6) eingeschaltet, so daß die Druckluft-Förderungseinrichtung (1) beginnt, Druckluft zu fördern. Da aus dem mit dem Druckluftspeicher (9) verbundenen Druckluftleitungszweig auf der Ansaugseite der Druckluft-Förderungseinrichtung (1) keine nennenswerte Luftmenge angesaugt werden kann, bildet sich auf der Ansaugseite sodann ein Unterdruck gegenüber dem Atmosphärendruck, welcher ein Öffnen des Rückschlagventils (40) bewirkt. Hierdurch kann die Druckluft-Förderungseinrichtung (1) Luft aus der Atmosphäre durch die Luftansaugeinrichtung (4) ansaugen. Die angesaugte Luft wird auf der Auslaßseite der Druckluft-Förderungseinrichtung (1) abgegeben und strömt über die Luftabgabe-/-trocknereinrichtung (2), das Rückschlagventil (50), die Umschaltventileinrichtung (3) und die Balgventile (60, 61, 62, 63) in die Luftfederbälge (64, 65, 66, 67).

Hierbei wird die entstehende Niveaulage über die Wegsensoren (68, 69, 70, 71) durch das Steuergerät (5) überwacht. Bei Erreichen einer gewünschten Niveaulage an einem der Luftfederbälge (64, 65, 66, 67) schaltet das Steuergerät (5) das diesem Luftfederbalg vorgeschaltete Balgventil (60, 61, 62, 63) in die Absperrstellung. Sobald alle Balgventile (60, 61, 62, 63) auf diese Weise in die Absperrstellung geschaltet worden sind, schaltet das Steuergerät (5) den Elektromotor (6) ab und das Speicherventil (8) in die Absperrstellung. Hiermit ist der Auffüllvorgang der Luftfederbälge (64, 65, 66, 67) abgeschlossen.

Neben der Auffüllung der Luftfederbälge (64, 65, 66, 67) kann bei der Inbetriebnahme der Luftfederungsanlage auch ein Auffüllen des zunächst auf Atmosphärendruck befindlichen Druckluftspeichers (9) sinnvoll sein. Hierzu wird mittels der Umschaltventileinrichtung (3) eine Verbindung zwischen dem Auslaßanschluß (106) der Druckluft-Förderungseinrichtung (1) und dem Druckluftspeicher (9) geschaltet. Das Speicherventil (8) wird in die geöffnete Stellung geschaltet, die Balgventile (60, 61, 62, 63) verbleiben in der Absperrstellung. Sodann wird der Elektromotor (6) eingeschaltet, so daß die Druckluft-Förderungseinrichtung (1) beginnt, Druckluft zu fördern. Die Druckluft-Förderungseinrichtung (1) saugt sodann Luft aus der Atmosphäre durch die Luftansaugeinrichtung (4) an. Die angesaugte Luft wird auf der Auslaßseite der Druckluft-Förderungseinrichtung (1) abgegeben und strömt über die Luftabgabe-/-trocknereinrichtung (2), das Rückschlagventil (50), die Umschaltventileinrichtung (3) und das Speicherventil (8) in den Druckluftspeicher (9).

Dieser Auffüllvorgang des Druckluftspeichers (9) kann beispielsweise zeitgesteuert ablaufen, d.h. der Elektromotor (6) wird für eine vorbestimmte Auffüll-Zeitspanne eingeschaltet. Sofern der Drucksensor (7) vorgesehen ist, wird die entstehende Druckhöhe über den Drucksensor (7) durch das Steuergerät (5) überwacht.. Nach Ablauf der vorbestimmten Auffüll-Zeitspanne oder bei Erreichen eines gewünschten Druckwerts schaltet das Steuergerät (5) den Elektromotor (6) wieder ab und schaltet außerdem das Speicherventil (8) in die Absperrstellung. Hiermit ist der Auffüllvorgang des Druckluftspeichers (9) abgeschlossen.

Der zuvor erläuterte Auffüllvorgang bzw. der Betriebsmodus "Minderdruckkompensation" wird von dem Steuergerät (5) auch im späteren Betrieb der Luftfederungsanlage automatisch eingestellt, wenn anhand der Signale der Sensoren (7, 68, 69, 70, 71) eine zu geringe Luftmenge in der Luftfederungsanlage vermutet wird.

Im späteren Betrieb, d. h. nach erstmaligem Auffüllen des Druckluftspeichers (9) und der Luftfederbälge (64, 65, 66, 67), kann der oben beschriebene Minderdruck-Zustand z. B. infolge von Undichtigkeiten an Teilen der Luftfederungsanlage oder auch durch einen Betrieb der Luftfederungsanlage unter geänderten klimatischen Gegebenheiten, d. h. bei geringeren Umgebungstemperaturen, auftreten. So ist beispielsweise notwendig, einen bei hohen Umgebungstemperaturen auf einen erwünschten Solldruck aufgefüllten Druckluftspeicher (9) mit Druckluft nachzubefüllen, wenn das mit der Luftfederungsanlage ausgestattete Fahrzeug in einer Region mit geringeren Umgebungstemperaturen betrieben wird. Wie erläutert, erkennt das Steuergerät (5) einen solchen Minderdruck-Zustand automatisch durch regelmäßige Auswertung der Signale der Sensoren (7, 68, 69, 70, 71) und stellt in einem solchen Fall automatisch den Betriebsmodus "Minderdruckkompensation" ein.

Im umgekehrten Fall kann es bei einem Fahrzeug, das zunächst in einer kälteren klimatischen Region betrieben wird, bei einem Betrieb in einer wärmeren klimatischen Region vorkommen, daß die Luftmenge in der Luftfederungsanlage zu groß ist, was sich an einem Druck im Druckluftspeicher (9) äußert, der oberhalb eines gewünschten bzw. eines zulässigen Grenzwerts liegt. In einem solchen Fall wird der Betriebsmodus "Überdruckkompensation" aktiviert.

Hierzu verbindet das Steuergerät (5) mittels der Umschaltventileinrichtung (3) den Druckluftspeicher (9) mit der Ansaugseite der Druckluft-Förderungseinrichtung (1). Zum Abbau des Überdrucks kann nun durch Öffnen des Speicherventils (8) Druckluft aus dem Druckluftspeicher (9) über das Speicherventil (8), die Umschaltventileinrichtung (3), das Rückschlagventil (51) sowie die Druckluft-Förderungseinrichtung (1) zu der Luftabgabe/-trocknereinrichtung (2) gelangen. Infolge des Rückschlagventils (40) kann die Druckluft hierbei nicht über die Luftansaugeinrichtung (4) entweichen, sondern strömt durch die in Strömungsrichtung automatisch öffnenden Rückschlagventile (11, 13) durch die Druckluft-Förderungseinrichtung (1) hindurch, ohne daß der Elektromotor (6) eingeschaltet werden muß. In der Luftabgabe-/-trocknereinrichtung (2) bewirkt der ankommende Überdruck ein Umschalten des Ventils (20) in seine dritte Schaltstellung, so daß die Druckluft weiter durch das Ventil (20), die Druckluftleitung (24), den Lufttrockner (21), die Druckluftleitung (25) und wiederum durch das Ventil (20) durch den Entlüftungsanschluß (215) in die Atmosphäre strömen kann. Über das Rückschlagventil (50) strömt in diesem Zustand keine Luft, da die in diesem Betriebszustand über die Umschaltventileinrichtung (3) mit dem Rückschlagventil (50) verbundenen Balgventile (60, 61, 62, 63) sich alle in der Absperrstellung befinden.

Der Zustand "Überdruckkompensation" kann beispielsweise so lange beibehalten werden, bis sich der Überdruck so weit abgebaut hat, daß das Ventil (20) selbsttätig in seine zweite Schaltstellung zurückgeht. In diesem Fall erfolgt eine Regelung und Begrenzung des Überdrucks durch geeignete Abstimmung zwischen der Druckluftbetätigung des Ventils (20) und der Rückstellfeder (208), mit anderen Worten, durch entsprechende Wahl der wirksamen Fläche des Kolbens (205) sowie der Kraft der Feder (208).

Wie aus den vorangegangenen Erläuterungen erkennbar ist, erfolgt die Einstellung und Beibehaltung eines geeigneten Druckbereichs in der Luftfederungsanlage auch ohne Verwendung des Drucksensors (7) quasi automatisch, da sich auf der einen Seite bei entsprechendem Minderdruck automatisch das Rückschlagventil (40) öffnet und somit eine Luftansaugung aus der Atmosphäre ermöglicht, auf der anderen Seite bei entsprechendem Überdruck sich automatisch das Ventil (20) öffnet und ein Ausströmen der überschüssigen Luft in die Atmosphäre ermöglicht.

Die dargestellte Luftfederungsanlage ist damit auch ohne den Drucksensor (7) funktionsfähig. Somit kann z. B. aus Kostengründen auf diesen Drucksensor verzichtet werden. Falls dennoch ein Drucksensor (7) vorgesehen ist, besteht ein weiterer Vorteil darin, daß auch bei einem Defekt oder Ausfall des Drucksensors (7) die Luftfederungsanlage sicher weiterbetrieben werden kann.

Eine Vermeidung von unzulässigem Überdruck in dem Druckluftspeicher (9) kann z. B. in einer Luftfederungsanlage ohne Drucksensor (7) durch ein Verbinden des Druckluftspeichers (9) mit dem zur Überdrucksicherung dienenden Ventil (20) in regelmäßigen Zeitabständen, z. B. alle 30 Minuten, sichergestellt werden.

Bei Verwendung des Drucksensors (7) sind weitere Regelalgorithmen realisierbar, die in dem Steuergerät (5) als Steuerprogramm vorgesehen werden können, und durch die weitere Vorteile bei der Steuerung der Luftfederungsanlage erzielt werden können.

Bei Vorhandensein des Drucksensors (7) führt das Steuergerät (5) in einer vorteilhaften Ausgestaltung der Erfindung eine regelmäßige Überwachung des Drucks in dem Druckluftspeicher (9) durch. Hierfür verbindet das Steuergerät (5) den Druckluftspeicher (9) durch Betätigung des Speicherventils (8) und der Umschaltventileinrichtung (3) mit dem Drucksensor (7). Über die Rückschlagventile (50, 52) wird dabei verhindert, daß sich die Druckluft aus dem Druckluftspeicher (9) unerwünschterweise in andere Zweige der Luftfederungsanlage ausbreitet. Stellt das Steuergerät (5) bei einer derartigen regelmäßigen Kontrolle fest, daß der Druck im Druckluftspeicher (9) einen gewünschten Grenzwert überschreitet, stellt das Steuergerät (5) den Betriebsmodus "Überdruckkompensation" ein.

Zusätzlich ist es vorteilhaft, eine Kontrolle und Festlegung des zu begrenzenden Luftdrucks mittels des Steuergeräts (5) vorzusehen. Hierfür unterbricht das Steuergerät (5) in vorbestimmten Zeitabständen die zuvor beschriebene Überdruck-Entlüftung über das Ventil (20) durch Umschalten der Umschaltventileinrichtung (3), derart, daß wiederum eine Verbindung zwischen dem Drucksensor (7) und dem Druckluftspeicher (9) hergestellt wird, so daß der verbliebene Luftdruck im Druckluftspeicher gemessen werden kann. Sollte dabei ein Druckwert ermittelt werden, der oberhalb eines in dem Steuergerät (5) gespeicherten Grenzwertes liegt, so schaltet das Steuergerät (5) die Umschaltventileinrichtung (3) erneut um, so daß ein weiterer Überdruckabbau über das Ventil (20) erfolgen kann. Anderenfalls beendet das Steuergerät (5) den Betriebszustand "Überdruckkompensation" und stellt wiederum den Betriebsmodus "Neutralzustand" ein.

Zusätzlich prüft in einer vorteilhaften Ausgestaltung das Steuergerät (5) in gewissen Zeitabständen die in den Luftfederbälgen (64, 65, 66, 67) vorliegenden Druckwerte durch Verbinden eines der Luftfederbälge (64, 65, 66, 67) mit dem Drucksensor (7) durch geeignete Steuerung der Umschaltventileinrichtung (3) und der Absperrventile (8, 60, 61, 62, 63). Die ermittelten Druckwerte der Luftfederbälge (64, 65, 66, 67) und des Druckluftspeichers (9) werden in dem Steuergerät (5) gespeichert.

Falls zwischen dem Druckniveau im Druckluftspeicher (9) einerseits und den Druckniveaus in den Luftfederbälgen (64, 65, 66, 67) andererseits erheblich Unterschiede auftreten, können diese von dem Steuergerät (5) anhand der gespeicherten Druckwerte festgestellt werden und geeignete Abhilfemaßnahmen eingeleitet werden. So würde eine große Druckdifferenz zwischen dem Druckluftspeicher (9) und den Luftfederbälgen (64, 65, 66, 67) beim Fördern von dem niedrigen in das hohe Druckniveau zu einer relativ langen Einschaltdauer der Druckluft-Förderungseinrichtung (1) führen. Um die Einschaltdauer zu verringern, kann das Steuergerät (5) in einer vorteilhaften Ausgestaltung derart programmiert sein, daß es die genannte Druckdifferenz auf einen vorbestimmten Wert begrenzt.

Falls der Druckluftspeicher (9) ein um mehr als den vorbestimmten Wert höheres Druckniveau aufweisen sollte als die Luftfederbälge (64, 65, 66, 67), schaltet das Steuergerät (5) die Luftfederungsanlage in den bereits erläuterten Betriebsmodus "Überdruckkompensation", wobei zusätzlich durch Einschalten des Elektromotors (6) die Druckluft-Förderungseinrichtung (1) durch das Steuergerät (5) für eine vorbestimmte Zeit in Betrieb gesetzt wird. Hierdurch wird eine bestimmte Luftmenge über das Ventil (20) in die Atmosphäre gepumpt. Nach Ablauf der vorbestimmten Zeit schaltet das Steuergerät (5) die Druckluft-Förderungseinrichtung (1) wieder ab und überprüft erneut den im Druckluftspeicher (9) dann vorliegenden Druck.

Falls andererseits der Druckluftspeicher (9) ein um mehr als den vorbestimmten Wert niedrigeres Druckniveau aufweisen sollte als die Luftfederbälge (64, 65, 66, 67), schaltet das Steuergerät (5) die Luftfederungsanlage in den bereits erläuterten Betriebsmodus "Minderdruckkompensation". Hierdurch wird über die Luftansaugeinrichtung (4) Luft aus der Atmosphäre angesaugt und in den Druckluftspeicher (9) gepumpt. Bei Erreichen eines gewünschten Druckwerts schaltet das Steuergerät (5) die Luftfederungsanlage wieder in den Betriebsmodus "Neutralzustand".

Im weiteren Betrieb der Luftfederungsanlage überprüft das Steuergerät (5) anhand der Signale der Wegsensoren (68, 69, 70, 71), ob die Niveaulage des Fahrzeugaufbaus gegenüber den Fahrzeugrädern bzw. der Fahrbahn einem gewünschten Sollwert entspricht. Dieser Sollwert kann z. B. fahrsituationsabhängig automatisch von dem Steuergerät (5) aus einer Anzahl vorgegebener Sollwerte bzw. Sollwertfunktionen gewählt werden. Es kann auch eine Sollwertvorgabe durch manuellen Eingriff z. B. durch den Fahrer vorgesehen sein. Sollte bei einem oder mehreren der Signale der Wegsensoren (68, 69, 70, 71) ein Wert ermittelt werden, der unterhalb des jeweiligen Sollwerts liegt, dann ist an dem entsprechend zugeordneten Luftfederbalg ein Heben des Fahrzeugaufbaus erwünscht, d. h. der entsprechende Luftfederbalg muß mit zusätzlicher Druckluft befüllt werden. Im folgenden sei angenommen, daß dies bei dem Luftfederbalg (64) erforderlich ist.

Das Steuergerät (5) steuert die Luftfederungsanlage dann in den Betriebsmodus "Erhöhen". Hierbei wird der Druckluftspeicher (9) durch Schalten des Speicherventils (8) in die geöffnete Stellung mit der Umschaltventileinrichtung (3) verbunden. Die Umschaltventileinrichtung (3) wird derart geschaltet, daß der Druckluftspeicher (9) mit der Ansaugseite der Druckluft-Förderungseinrichtung (1) verbunden wird. Hierdurch wird zugleich die Auslaßseite der Druckluft-Förderungseinrichtung (1) mit den Balgventilen (60, 61, 62, 63) verbunden. Das Steuergerät (5) schaltet des weiteren das Balgventil (60) in die geöffnete Stellung. Sofern in dem Druckluftspeicher (9) ein höheres Druckniveau vorliegt als in dem Luftfederbalg (64), strömt die Druckluft bereits bei stillstehender Druckluft-Förderungseinrichtung (1) direkt über das Rückschlagventil (52) sowie zusätzlich durch die Druckluft-Förderungseinrichtung (1) in den Luftfederbalg (64), d.h. mittels des Rückschlagventils (52) ist die Druckluft-Förderungseinrichtung (1) nach Art eines Bypasses überbrückbar. Durch die direkte Verbindung über das Rückschlagventil (52) wird ein geringerer und damit günstigerer Strömungswiderstand erzielt. Hierbei überwacht das Steuergerät (5) anhand des ggf. von dem Drucksensor (7) abgegebenen Drucksignals und des von dem Wegsensor (68) abgegebenen Wegsignals die Befüllung des Luftfederbalgs (64). Sobald der gewünschte Sollwert der Niveaulage am Luftfederbalg (64) erreicht ist, schaltet das Steuergerät (5) das Speicherventil (8) und das Balgventil (60) in die Absperrstellung.

Zur Beschleunigung des Strömungsvorgangs bzw. wenn das Steuergerät (5) keine Veränderung an dem von dem Wegsensor (68) ermittelten Wert feststellt, schaltet das Steuergerät (5) zur Unterstützung der Luftförderung den Elektromotor (6) ein, wodurch die Druckluft-Förderungseinrichtung (1) in Betrieb gesetzt wird. Dies ist insbesondere erforderlich, wenn der Druck in dem Druckluftspeicher (9) geringer oder höchstens gleich dem Druck in dem zu befüllenden Luftfederbalg (64) ist, oder wenn die Befüllung des Luftfederbalgs beschleunigt werden soll. Durch Inbetriebsetzen der Druckluft-Förderungseinrichtung (1) strömt die geförderte Luft über das Rückschlagventil (51), die Druckluft-Förderungseinrichtung (1), die Luftabgabe-/-trocknereinrichtung (2) und das Rückschlagventil (50) in den Luftfederbalg (64).

Sofern z.B. bei Beginn des Betriebsmodus "Erhöhen" auf der Auslaßseite der Druckluft-Förderungseinrichtung (1), insbesondere in dem Volumen (15), ein geringerer Druck vorliegt als in dem zu befüllenden Luftfederbalg (64), wird ein unerwünschtes Absenken der Niveaulage an diesem Luftfederbalg (64) infolge eines Druckausgleichs zwischen dem Luftfederbalg (64) und dem Volumen (15) durch das Rückschlagventil (50) verhindert. In vorteilhafter Weise ist das Rückschlagventil (50) hierfür möglichst dicht an der Umschaltventileinrichtung (3) angeordnet, um Ausgleichsvorgänge über die Druckluftleitungen zu minimieren.

Sollte es beim Fördern der Luft aus dem Druckluftspeicher (9) durch die Druckluft-Förderungseinrichtung (1) vorkommen, daß die vorhandene Druckluftmenge in dem Druckluftspeicher (9) nicht für das Befüllen des beispielhaft genannten Luftfederbalgs (64) ausreicht, so würde der Luftdruck auf der Ansaugseite der Druckluft-Förderungseinrichtung (1) unter den Atmosphärendruck fallen, wodurch das Rückschlagventil (40) der Luftansaugeinrichtung (4) automatisch öffnet. Hierdurch kann die Druckluft-Förderungseinrichtung (1) automatisch und ohne weitere Eingriffe durch das Steuergerät (5) die notwendige Luft aus der Atmosphäre ansaugen und so für die erforderliche Luftmenge in dem Luftfederbalg (64) sorgen.

Zeigt im umgekehrten Fall der Wegsensor (68) an, daß die Niveaulage oberhalb des Sollwerts liegt, so wäre der Luftfederbalg (64) zu entlüften. Das Steuergerät (5) steuert die Luftfederungsanlage dann in den Betriebsmodus "Absenken". Hierbei werden das Speicherventil (8) und das Balgventil (60) in die geöffnete Stellung geschaltet. Außerdem wird die Umschaltventileinrichtung (3) derart geschaltet, daß der Luftfederbalg (64) mit der Ansaugseite der Druckluft-Förderungseinrichtung (1) und der Druckluftspeicher (9) mit der Auslaßseite der Druckluft-Förderungseinrichtung (1) verbunden ist. Falls der Luftdruck in dem Luftfederbalg (64) höher als der Luftdruck in dem Druckluftspeicher (9) ist, so strömt die Druckluft direkt über das Rückschlagventil (52) sowie zusätzlich über die Druckluft-Förderungseinrichtung (1) von dem Luftfederbalg (64) in den Druckluftspeicher (9). Die Druckluft-Förderungseinrichtung (1) muß dann nicht betätigt werden. Analog zu dem Betriebsmodus "Erhöhen" überwacht das Steuergerät (5) das Entlüften des Luftfederbalgs (64) über die Sensoren (7, 68). Wenn die gewünschte Niveaulage gemäß dem Sollwert beim Luftfederbalg (64) erreicht ist, beendet das Steuergerät (5) den Betriebsmodus "Absenken", indem das Speicherventil (8) und das Balgventil (60) in die Absperrstellung geschaltet werden.

Zur Beschleunigung des Strömungsvorgangs bzw. wenn das Steuergerät (5) keine Veränderung an dem von dem Wegsensor (68) ermittelten Wert feststellt, schaltet das Steuergerät (5) zur Unterstützung der Luftförderung den Elektromotor (6) ein, wodurch die Druckluft-Förderungseinrichtung (1) in Betrieb gesetzt wird. Dies ist insbesondere erforderlich, wenn der Druck in dem zu entleerenden Luftfederbalg (64) geringer oder höchstens gleich dem Druck in dem Druckluftspeicher (9) ist, oder wenn die Entleerung des Luftfederbalgs beschleunigt werden soll. Ein Ansaugen von Luft aus der Atmosphäre über die Luftansaugeinrichtung (4) kommt in diesem Betriebsmodus nicht in Betracht. Die Druckluft-Förderungseinrichtung (1) saugt daher Luft aus dem Luftfederbalg (64) über das Balgventil (60), die Umschaltventileinrichtung (3) und das Rückschlagventil (51) an und fördert diese über die Luftabgabe-/-trocknereinrichtung (2), das Rückschlagventil (50), die Umschaltventileinrichtung (3) sowie das Speicherventil (8) in den Druckluftspeicher (9).

Sollte in dem Druckluftspeicher (9) bereits ein ausreichender oder sogar über einem gewünschten Grenzwert liegender Druckwert vorliegen, so spricht das zur Überdrucksicherung dienende Ventil (20) selbständig an und schaltet in seine dritte Schaltstellung, so daß die von der Druckluft-Förderungseinrichtung (1) geförderte Druckluft in die Atmosphäre entlüftet wird. Unabhängig von dieser automatischen Überdrucksicherung über das Ventil (20) kann auch das Steuergerät (5) bei Erreichen eines vorgegebenen, in dem Steuergerät (5) gespeicherten Druckwertes in dem Druckluftspeicher (9), welcher anhand des Signals des Drucksensors (7) überprüft wird, ein weiteres Fördern von Druckluft in den Druckluftspeicher (9) unterbinden, indem das Steuergerät (5) das Speicherventil (8) in die Absperrstellung schaltet. Die fortan von der Druckluft-Förderungseinrichtung (1) geförderte Druckluft wird dann infolge eines schnell ansteigenden Drucks an der gegenüber dem Druckluftspeicher (9) abgesperrten Auslaßseite der Druckluft-Förderungseinrichtung (1) über das Ventil (20) in die Atmosphäre entlüftet.

Sofern z.B. bei Beginn des Betriebsmodus "Absenken" auf der Ansaugseite der Druckluft-Förderungseinrichtung (1), insbesondere in dem Volumen (10), ein höherer Druck vorliegt als in dem zu entlüftenden Luftfederbalg (64), wird ein unerwünschtes Anheben der Niveaulage an diesem Luftfederbalg (64) infolge eines Druckausgleichs zwischen dem Luftfederbalg (64) und dem Volumen (10) durch das Rückschlagventil (51) verhindert. In vorteilhafter Weise ist das Rückschlagventil (51) hierfür möglichst dicht an der Umschaltventileinrichtung (3) angeordnet, um Ausgleichsvorgänge über die Druckluftleitungen zu minimieren.

Eine typische Größe für das Volumen (10) bei Luftfederungsanlagen für Personenkraftwagen liegt bei etwa 0,5 Liter, für das Volumen (15) bei etwa 0,4 Liter. Durch die Verwendung der Rückschlagventile (50, 51) kann auf eine konstruktiv aufwendige Volumenminimierung bei der Druckluft-Förderungseinrichtung (1), dem häufig baulich in die Druckluft-Förderungseinrichtung (1) integrierten Elektromotor (6) und der Luftabgabe-/-trocknereinrichtung (2) verzichtet werden. Statt dessen kann eine gezielte Optimierung der Konstruktion im Hinblick auf die Kosten durchgeführt werden.

Der Betriebsmodus "Regeneration" dient zur Regeneration, d. h. zur Entfeuchtung, des in dem Lufttrockner (21) vorgesehenen Trockner-Granulates. Hierfür schaltet das Steuergerät (5) das Speicherventil (8) und die Balgventile (60, 61, 62, 63) in die Absperrstellung und setzt durch Einschalten des Elektromotors (6) die Druckluft-Förderungseinrichtung (1) in Betrieb. Die Druckluft-Förderungseinrichtung (1) saugt dann über die Luftansaugeinrichtung (4) Luft aus der Atmosphäre an und gibt diese Luft verdichtet auf der Auslaßseite ab, wobei die Druckluft gegenüber der Umgebungstemperatur erwärmt wird. Sobald hierbei der auf der Auslaßseite ansteigende Luftdruck vorbestimmte Werte erreicht, schaltet das Ventil (20) von der ersten Schaltstellung zunächst in die zweite Schaltstellung und schließlich in die dritte Schaltstellung. In der dritten Schaltstellung strömt die Druckluft von der Druckluftleitung (22) durch das Ventil (20) gedrosselt in die Druckluftleitung (24) ein, d. h. die Druckluft entspannt sich auf ein geringeres Druckniveau als das in der Druckluftleitung (22) vorhandene Druckniveau. Die Luftabgabe-/-trocknereinrichtung (2) ist vorzugsweise räumlich relativ dicht an der Druckluft-Förderungseinrichtung (1) angeordnet, so daß die erwärmte Druckluft ohne wesentliche Temperaturverringerung in dem Lufttrockner (21) ankommt. Die auf diese Weise entspannte und zudem erwärmte Luft weist ein relativ hohes Feuchtigkeitsaufnahme-Potential auf, so daß die aus dem Lufttrockner (21) in die Druckluftleitung (25) einströmende Druckluft einen relativ hohen Feuchtigkeitsgehalt aufweist. Diese Luft wird sodann durch das Ventil (20) in die Umgebung entlüftet. Hierdurch wird eine sehr effiziente und schnelle Trocknung des Trockner-Granulates erreicht.

Die Regeneration des Trockner-Granulates wird im übrigen auch immer dann ausgeführt, wenn der bereits erläuterte Betriebsmodus "Überdruckkompensation" ausgeführt wird, d. h. bei Abbau von z. B. in dem Druckluftspeicher (9) gespeicherter überschüssiger Druckluft über das Ventil (20). In diesem Fall ist ein Ansaugen von Luft aus der Atmosphäre nicht erforderlich.

In einer bevorzugten Ausgestaltung der Erfindung, die insbesondere bei einer Luftfederungsanlage ohne den Drucksensor (7) anzuwenden ist, wird der Betriebsmodus "Regeneration" von dem Steuergerät (5) immer im Anschluß an einen der anderen Betriebsmodi automatisch ausgeführt, wenn hierbei die Druckluft-Förderungseinrichtung (1) in Betrieb gesetzt wurde. In diesem Fall führt das Steuergerät (5) den Betriebsmodus "Regeneration" im Sinne eines Nachlaufs aus, d. h. bei Beendigung eines vorangegangenen Betriebsmodus, z. B. "Erhöhen", werden das Speicherventil (8) und die Balgventile (60, 61, 62, 63) in die Absperrstellung geschaltet, der Elektromotor (6) jedoch nicht sofort abgeschaltet, sondern für eine Nachlaufzeit eingeschaltet gelassen. Hierdurch läuft die Druckluft-Förderungseinrichtung (1) weiter und baut auf der Auslaßseite einen Überdruck auf. Die unter dem Überdruck stehende Luft entweicht dann über das Ventil (20) und den Lufttrockner (21), so daß die beschriebene Regeneration des Trockner-Granulates durchgeführt wird. Nach Ablauf der vorgegebenen Nachlaufzeit, z. B. 5 Sekunden, schaltet das Steuergerät (5) den Elektromotor (6) ab, wodurch die Luftfederungsanlage von dem Betriebsmodus "Regeneration" in den Betriebsmodus "Normalzustand" übergeht. Hierdurch wird sichergestellt, daß das Trockner-Granulat jederzeit eine ausreichende Aufnahmefähigkeit für die Feuchtigkeit besitzt.

Wie erläutert, wird der Lufttrockner (21) in sämtlichen Betriebsmodi der Luftfederungsanlage immer in derselben Strömungsrichtung von der Druckluft durchflossen. Hierdurch ist es möglich, das Rückschlagventil (50) in der Druckluftleitung zwischen der Luftabgabe-/-trocknereinrichtung (2) und der Umschaltventileinrichtung (3) anzuordnen, derart, daß das Rückschlagventil (50) relativ dicht an der Umschaltventileinrichtung (3) angeordnet ist, d. h. stromabwärts der Luftabgabe-/-trocknereinrichtung (2). Dies hat den Vorteil, daß im Betriebsmodus "Erhöhen" ein unerwünschtes Absenken der Niveaulage infolge eines Druckausgleichs zwischen dem Volumen (15) und den Luftfederbälgen besonders wirksam vermieden werden kann. Würde anderenfalls ein Lufttrocknungskonzept eingesetzt werden, bei dem der Lufttrockner (21) im Regenerationsbetrieb in entgegengesetzter Strömungsrichtung von der Druckluft durchflossen wird als beim Fördern von Druckluft durch die Druckluft-Förderungseinrichtung (1), wie aus dem eingangs genannten Stand der Technik bekannt, dann müßte das Rückschlagventil (50) in der Luftfederungsanlage gemäß Fig. 1 zwischen der Druckluft-Förderungseinrichtung (1) und der Luftabgabe-/-trocknereinrichtung (2) angeordnet werden. In diesem Fall könnte das Rückschlagventil (50) aber nicht Druckausgleichsvorgänge zwischen den in der Luftabgabe/-trocknereinrichtung (2) vorhandenen Volumina und den Luftfederbälgen verhindern. Die Folge wäre, daß im Betriebsmodus "Erhöhen" ein unerwünschtes Absenken der Niveaulage infolge des Druckausgleichs auftreten kann.

Ein weiterer Vorteil, der sich aus der immer in derselben Strömungsrichtung von der Druckluft durchflossenen Luftabgabe-/-trocknereinrichtung (2) und dem infolgedessen in der Druckluftleitung zwischen der Luftabgabe/-trocknereinrichtung (2) und der Umschaltventileinrichtung (3) angeordneten Rückschlagventil (50) ergibt, ist, daß beim Abbau eines Überdrucks im Betriebsmodus "Überdruckkompensation" die Luft nicht ohne Durchströmen des Lufttrockners (21) in die Atmosphäre entweichen kann, da das Rückschlagventil (50) dies verhindert. Hierdurch kommt sämtliche in die Atmosphäre entlüftete Druckluft der Regeneration des Trockner-Granulates zugute.

Zusätzlich kann in dem Steuergerät (5), z.B. als Programmteil in einem in dem Steuergerät (5) ausgeführten Steuerprogramm, vorgesehen sein, die Luftfederungsanlage in den Betriebsmodus "Regeneration" zu schalten, wenn eine hohe Feuchtigkeitsdichte in dem Luftfederungssystem vorliegt. Hierfür kann ein zusätzlicher Feuchtesensor zur Ermittlung der Luftfeuchte in dem Luftfederungssystem vorgesehen sein, der ein die Luftfeuchte repräsentierendes Signal an das Steuergerät (5) abgibt.

Schließlich kann die Luftfederungsanlage noch in dem Betriebsmodus "Anlaufhilfe" betrieben werden. Dieser Betriebsmodus wird immer dann benötigt, wenn die von dem Elektromotor (6) aufbringbare Antriebsleistung nicht zu einem Anlaufen des Kompressors (12) führt. Dies kann beispielsweise bei einem relativ hohen Gegendruck auf der Auslaßseite, d. h. in dem Auslaßraum (150) des Kompressors (12), der Fall sein, insbesondere wenn der Kolben (17) sich in einer Lage etwa in der Mitte zwischen den beiden Totpunkten befindet.

In einer vorteilhaften Ausgestaltung, welche insbesondere bei einer Luftfederungsanlage ohne den Drucksensor (7) anzuwenden ist, wird vor dem Starten des Elektromotors (6) zunächst einmal das Speicherventil (8) geöffnet und die Umschaltventileinrichtung (3) für kurze Zeit umgeschaltet, d. h. in jeder der beiden Schaltstellungen betrieben. Hierdurch wird eine Druckgleichheit zwischen der Ansaugseite und der Auslaßseite der Druckluft-Förderungseinrichtung (1) hergestellt. Sodann wird der Elektromotor (6) gestartet.

In einer weiteren vorteilhaften Ausgestaltung erkennt das Steuergerät (5) einen Anlaufhilfe-Bedarf durch periodische Überwachung der mittels des Drucksensors (7) ermittelten Druckwerte, oder durch Auswertung der gespeicherten Druckwerte des Druckluftspeichers (9) und der Luftfederbälge oder durch Überwachung des von dem Elektromotor (6) aufgenommenen Stroms. Das Steuergerät (5) verbindet bei erkanntem Anlaufhilfe-Bedarf durch geeignete Steuerung der Umschaltventileinrichtung (3) und der Absperrventile (8, 60, 61, 62, 63) entweder den Druckluftspeicher (9) oder einen Luftfederbalg mit relativ hohem Luftdruck mit der Ansaugseite der Druckluft-Förderungseinrichtung (1). Hierdurch wird der Kolben (17) des Kompressors (12) von seiner Unterseite her mit Druck beaufschlagt, so daß die für ein Anlaufen des Kompressors (12) erforderliche, von dem Elektromotor (6) einzuspeisende Antriebsleistung verringert wird. Sobald der Kompressor (12) angelaufen ist, kann wieder in den eigentlich gewünschten Betriebsmodus der Luftfederungsanlage umgeschaltet werden.

## Patentansprüche

1. Luftfederungsanlage für ein Fahrzeug mit einem Druckluftspeicher (9), einer Druckluft-Förderungseinrichtung (1), wenigstens einem Luftfederbalg (64, 65, 66, 67) sowie einer elektrisch ansteuerbaren Umschaltventileinrichtung (3), mittels der in einer ersten Schaltstellung zum Erhöhen der Luftmenge in wenigstens einem Luftfederbalg (64, 65, 66, 67) der Druckluftspeicher (9) mit einem Sauganschluß (105) der Druckluft-Förderungseinrichtung (1) und ein Auslaßanschluß (106) der Druckluft-Förderungseinrichtung (1) mit dem wenigstens einen Luftfederbalg (64, 65, 66, 67) verbindbar ist, und mittels der in einer zweiten Schaltstellung zum Absenken der Luftmenge in wenigstens einem Luftfederbalg (64, 65, 66, 67) der wenigstens eine Luftfederbalg (64, 65, 66, 67) mit dem Sauganschluß (105) der Druckluft-Förderungseinrichtung (1) und der Auslaßanschluß (106) der Druckluft-Förderungseinrichtung (1) mit dem Druckluftspeicher (9) verbindbar ist, **dadurch gekennzeichnet, daß** die Umschaltventileinrichtung (3) mit der Druckluft der Luftfederungsanlage vorsteuerbar ist, wobei die Umschaltventileinrichtung (3) aus einem Vorsteuerventil (31) und einem Umschaltventil (30) besteht, wobei das Umschaltventil (30) als ein durch Druckluft betätigbares 4/2-Wegeventil ausgebildet ist.

2. Luftfederungsanlage nach Anspruch 1, **dadurch gekennzeichnet, daß** das Vorsteuerventil (31) als elektrisch betätigbares 3/2-Wegeventil ausgebildet ist.

3. Luftfederungsanlage nach wenigstens einem der vorhergehenden Ansprüche, **dadurch gekennzeichnet, daß** die Umschaltventileinrichtung (3) eine einzige Elektromagnetanordnung (301, 302) aufweist.

4. Luftfederungsanlage nach wenigstens einem der vorhergehenden Ansprüche, **dadurch gekennzeichnet, daß** der Vorsteuerdruck für die Umschaltventileinrichtung (3) an der Auslaßseite der Druckluft-Förderungseinrichtung (1) entnommen wird.

5. Luftfederungsanlage nach wenigstens einem der vorhergehenden Ansprüche, **dadurch gekennzeichnet, daß** beim Umschalten der Umschaltventileinrichtung (3) zwischen der ersten und der zweiten Schaltstellung der Vorsteuerdruck in die Atmosphäre abgegeben wird.

6. Luftfederungsanlage nach wenigstens einem der vorhergehenden Ansprüche, **dadurch gekennzeichnet, daß** an den mit der Druckluft-Förderungseinrichtung (1) verbundenen Anschlüssen (315, 317) der Umschaltventileinrichtung (3) ein Rückschlagventil (52) angeschlossen ist, mittels dessen die Druckluft-Förderungseinrichtung (1) nach Art eines Bypasses überbrückbar ist.

## Claims

1. Air suspension system for a vehicle having a compressed-air reservoir (9), a compressed-air feed device (1), at least one air suspension bellows (64, 65, 66, 67) and an electrically actuatable change-over valve device (3), by means of which, in a first position, to increase the amount of air in at least one air suspension bellows (64, 65, 66, 67) the compressed-air reservoir (9) is able to connect to an intake port (105) of the compressed-air feed device (1) and an outlet port (106) of the compressed-air feed device (1) is able to connect to the at least one air-suspension bellows (64, 65, 66, 67), and by means of which, in a second position, to reduce the amount of air in at least one air suspension bellows (64, 65, 66, 67) the at least one air suspension bellows (64, 65, 66, 67) is able to connect to the intake port (105) of the compressed-air feed device (1) and the outlet port (106) of the compressed-air feed device (1) is able to connect to the compressed-air reservoir (9), **characterized in that** the change-over valve device (3) is pilot-controllable with the compressed air of the air suspension system, the change-over valve device (3) consisting of a pilot valve (31) and a change-over valve (30), the change-over valve (30) being in the form of a 4/2 way valve actuatable by compressed air.

2. Air suspension system according to claim 1, **characterized in that** the pilot valve (31) is in the form of an electrically actuatable 3/2 way valve.

3. Air suspension system according to at least one of the preceding claims, **characterized in that** the change-over valve device (3) has a single electromagnet arrangement (301, 302).

4. Air suspension system according to at least one of the preceding claims, **characterized in that** the pilot pressure for the change-over valve device (3) is tapped at the outlet side of the compressed-air feed device (1).

5. Air suspension system according to at least one of the preceding claims, **characterized in that** when the change-over valve device (3) is changed over between the first and second positions the pilot pressure is released into the atmosphere.

6. Air suspension system according to at least one of the preceding claims, **characterized in that** a non-return valve (52) is connected to the ports (315, 317) of the change-over valve device (3) that are connected to the compressed-air feed device (1), by means of which non-return valve the compressed-air feed device (1) can be bridged as by a by-pass.

## Revendications

1. Système de suspension pneumatique pour un véhicule, comprenant un accumulateur d'air comprimé (9), un dispositif de refoulement d'air comprimé (1), au moins un soufflet de ressort pneumatique (64, 65, 66, 67) ainsi qu'un dispositif de vanne d'inversion (3) pouvant être commandé électriquement, au moyen duquel, dans une première position de commutation pour augmenter la quantité d'air dans au moins un soufflet de ressort pneumatique (64, 65, 66, 67), l'accumulateur d'air comprimé (9) peut être relié à un raccord d'aspiration (105) du dispositif de refoulement d'air comprimé (1) et un raccord de sortie (106) du dispositif de refoulement d'air comprimé (1) peut être relié au dit soufflet de ressort pneumatique (64, 65, 66, 67), et au moyen duquel, dans une deuxième position de commutation pour diminuer la quantité d'air dans ledit soufflet de ressort pneumatique (64, 65, 66, 67), ce soufflet de ressort pneumatique (64, 65, 66, 67) peut être relié au raccord d'aspiration (105) du dispositif de refoulement d'air comprimé (1) et le raccord de sortie (106) du dispositif de refoulement d'air comprimé (1) peut être relié à l'accumulateur d'air comprimé (9),
**caractérisé en ce que** le dispositif de vanne d'inversion (3) est à commande pilote par l'air comprimé du système de suspension pneumatique, le dispositif de vanne d'inversion (3) étant constitué d'une vanne de commande pilote (31) et d'une vanne d'inversion (30), et la vanne d'inversion (30) étant réalisée en tant que vanne 4/2 (4 orifices, 2 positions) qui peut être actionnée par de l'air comprimé.

2. Système de suspension pneumatique selon la revendication 1, **caractérisé en ce que** la vanne de commande pilote (31) est réalisée sous la forme d'une vanne 3/2 (3 orifices, 2 positions) pouvant être actionnée électriquement.

3. Système de suspension pneumatique selon l'une au moins des revendications précédentes, **caractérisé en ce que** le dispositif de vanne d'inversion (3) présente un seul agencement d'électroaimant (301, 302).

4. Système de suspension pneumatique selon l'une au moins des revendications précédentes, **caractérisé en ce que** la pression de commande pilote pour le dispositif de vanne d'inversion (3) est prélevée sur le côté de sortie du dispositif de refoulement d'air comprimé (1).

5. Système de suspension pneumatique selon l'une au moins des revendications précédentes, **caractérisé en ce que** lors de la commutation d'inversion du dispositif de vanne d'inversion (3) entre la première et la deuxième position de commutation, la pression de commande pilote est envoyée dans l'atmosphère.

6. Système de suspension pneumatique selon l'une au moins des revendications précédentes, **caractérisé en ce qu'**aux raccords (315, 317) du dispositif de vanne d'inversion (3), qui sont reliés au dispositif de refoulement d'air comprimé (1), est raccordée une valve anti-retour (52) au moyen de laquelle le dispositif de refoulement d'air comprimé (1) peut être court-circuité à la manière d'une dérivation.
